(19) Europäisches Patentamt
European Patent Office
Office européen des brevets

(11) **EP 4 576 010 B1**

(12) **EUROPEAN PATENT SPECIFICATION**

(45) Date of publication and mention
of the grant of the patent:
**18.03.2026  Bulletin 2026/12**

(21) Application number: **23217746.9**

(22) Date of filing: **18.12.2023**

(51) International Patent Classification (IPC):
*G06V 10/82* (2022.01)       *G06V 10/764* (2022.01)
*G06V 20/52* (2022.01)       *G06V 20/56* (2022.01)
*G06N 3/045* (2023.01)

(52) Cooperative Patent Classification (CPC):
**G06V 10/82; G06N 3/045; G06V 10/764;
G06V 20/52; G06V 20/56**

(54) **IMPROVED OBJECT ATTRIBUTE CLASSIFICATION**

VERBESSERTE KLASSIFIZIERUNG VON OBJEKTATTRIBUTEN

CLASSIFICATION D'ATTRIBUTS D'OBJETS AMÉLIORÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**25.06.2025  Bulletin 2025/26**

(73) Proprietor: **Axis AB**
**223 69 Lund (SE)**

(72) Inventors:
• **Kristensson, Mikael**
**22369 LUND (SE)**
• **Chen, Jiandan**
**223 69 LUND (SE)**
• **Xie, Haiyan**
**223 69 LUND (SE)**

(74) Representative: **AWA Sweden AB**
**Box 5117**
**200 71 Malmö (SE)**

(56) References cited:
**WO-A1-2017/015390**

• **ZHONG YANG ET AL: "Transferring from face
recognition to face attribute prediction through
adaptive selection of off-the-shelf CNN
representations", 2016 23RD INTERNATIONAL
CONFERENCE ON PATTERN RECOGNITION
(ICPR), IEEE, 4 December 2016 (2016-12-04),
pages 2264 - 2269, XP033085924**
• **PENGZE LIU ET AL: "Localization Guided
Learning for Pedestrian Attribute Recognition",
28 August 2018 (2018-08-28), XP081266708,
Retrieved from the Internet <URL:https://arxiv.
org/pdf/1808.09102.pdf>**
• **WU HONGLI ET AL: "A Deep Learning Method for
Pneumonia Detection Based on Fuzzy Non-
Maximum Suppression", 2021 2ND
INTERNATIONAL CONFERENCE ON ARTIFICIAL
INTELLIGENCE AND COMPUTER ENGINEERING
(ICAICE), IEEE, 5 November 2021 (2021-11-05),
pages 89 - 94, XP034138885**

**Description**

**Technical field**

The present disclosure generally relates to the field of image processing. In particular, the present disclosure relates to localization and classification of objects in images as well as to classification of object attributes.

**Background**

Artificial neural network (ANN)-based architectures have proven useful for detecting instances of (semantic) objects of certain object classes in an image, such as in a still image or an image frame of a video. Examples of object classes include e.g. humans, animals, vehicles, license plates, faces, and similar. In addition to just determining whether an object of a certain object class is likely present in an image, such architectures may also be trained to estimate where in the image the object is located. One example of a contemporary such architecture is a Feature Pyramid Network (FPN), which is believed to be particularly suitable for detecting objects at different scales.

ANN-based architectures may also be used to classify one or more attributes, features, or even activities, of objects. Attributes of an object may include for example color, texture, object shape, and e.g. context, such as for example whether an object is currently facing in a certain direction, whether an object is moving or standing still, whether the object is located on a particular type of surface (such as a road, sidewalk, etc.), or any other detail of the object or its whereabouts that may be categorized and labeled. Attribute classification is considered an important task in for example computer vision, as e.g. proper classification of attributes may help to for example distinguish between different objects present in a same scene.

Contemporary ANN-based architectures are however often not capable of distinguishing between different objects, and instead work by providing a number of object proposals. Each such proposal may for example include a proposed object location, confidence scores for one or more object classes, as well as confidence scores for one or more attribute classes for one or more attributes. Post-processing of the output from the ANN-based architecture is thus required in order to establish e.g. how many distinct objects there are in an image, where the objects are located, as well as the most likely object and/or attribute classes for the object. Known such post-processing operations include the use of so-called non-maximum suppression (NMS) and intersection-over-union (IOU) measures.

The present disclosure seeks to develop such post-processing of object proposals from ANN-based architectures, and to mitigate one or more shortcomings of contemporary technology.

WO 2017/015390 A1 (UNIV MARYLAND [US]) 26 January 2017 (2017-01-26) is a relevant prior art document.

**Summary**

For the above-stated purpose, the present disclosure proposes an improved method, device, computer program and computer program product for object attribute classification in an image as defined by the accompanying independent claims. Various embodiments are defined by the accompanying dependent claims.

According to a first aspect of the present disclosure, there is provided a method of object attribute classification in an image. The method includes obtaining, from an output of an artificial neural network (ANN) entity trained to localize and classify objects in an image using a plurality of feature map layers associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers. The method further includes identifying, among the plurality of object proposals and based on their respective indicated object class confidence scores, a first set including a main object proposal and one or more other object proposals. The method further includes ranking the feature map layers from a least significant feature map layer to a most significant feature map layer. The method further includes determining an attribute class for the first attribute based on the one or more attribute class confidence scores of all members of the first set, including taking the ranking of the feature map layers associated with the one or more other object proposals, as well as object location overlaps of the main object proposal with the one or more other object proposals, into account as part of such determining.

As will be described in more detail later herein, the envisaged method improves upon currently available technology in that it does not just disregard information pertinent to the object attributes found in the one or more object proposals that are not considered to be the main object proposal. Instead, the envisaged method uses this information together with the information provided by the main object proposal, and especially also considers whether information originating from a particular feature map layer is to be given more or less weight when deciding upon a final estimated attribute class for the particular first attribute of the object. As will be exemplified later herein, this reduces the risk of wrongly classifying attributes when e.g. more than one object is present in a same part of the image.

In one or more embodiments of the method, the object location of each object proposal may be indicated as a bounding box, and the method may further include using an intersection-over-union (IOU) measure/operation to determine the object location overlaps of the main object proposal with the one or more other object proposals. Such measures are commonly known and readily available, and may be efficiently implemented on modern hardware.

In one or more embodiments of the method, taking the ranking and object location overlaps into account may include that an attribute class confidence score indicated by an object proposal having a larger overlap with the main object proposal and associated with a feature map layer ranked as more significant is made more significant to determining the attribute class of the first attribute than an attribute class confidence score indicated by an object proposal having a smaller object overlap with the main object proposal and associated with a feature map layer ranked as less significant. Phrased differently, the envisaged method may include that in order for information of a particular object proposal to be considered as more relevant to the determining of the attribute class for the first attribute, this object proposal should have sufficiently large overlap (in terms of estimated object location) with the main object proposal, and also originate from a feature map layer that is ranked as being more relevant for (i.e. better at) determining the first attribute of the object. This compared to e.g. some other object proposal that has a smaller overlap with the main object proposal, and which originates from a feature map layer ranked as being less relevant for (i.e. worser at) determining the first attribute of the object. For example, if a particular feature map layer is considered to be better at (i.e. operates at a resolution more suitable for) determining e.g. a color of an object, information from object proposals originating from this particular feature map layer are given more weight in the determination of the attribute class for the first attribute as long as these object proposals also propose locations which are sufficiently similar to those proposed by the main object proposal.

In the method, determining the attribute class for the first attribute further includes: for each particular attribute class of the one or more attribute classes, iterating over members of the first set that indicates an attribute class confidence score for the particular attribute class. For each iteration, determining a term equal or proportional to a product of an object location overlap size of the member of the first set with the main object proposal, an overall ranking score for the feature map layer associated with the member, and the attribute class confidence score for the particular attribute class indicated by the member, and determining an overall attribute class score for the particular attribute class as equal or proportional to a sum of the terms determined during the iterating. The method further includes determining the attribute class for the first attribute as the attribute class having the highest such overall attribute class score. Such a procedure may help to implement the above-mentioned concept of assigning more significance to object proposals that closely overlap with the main object proposal (in terms of object location) and also originates from a feature map layer that is considered better and more relevant for classifying the first attribute.

In one or more embodiments of the method, the iterating may be performed only over members of the first set that indicates a highest attribute class confidence score for the particular attribute class. Phrased differently, it is envisaged to iterate only over the members of the first set for which the particular attribute class has the top-1 attribute class confidence score. In other examples, it may instead be iterated over all members of the first set, independently of whether the particular attribute class has the top-1 attribute class confidence score or not.

In one or more embodiments of the method, the overall attribute class score for each particular attribute class may further be defined as inversely proportional to a number of the members of the first set that are iterated over. For example, it iterating over a total number P of members, the overall attribute class score may be scaled by a factor 1/P, or similar.

In one or more embodiments of the method, the overall ranking score for the feature map layer associated with the member may be defined as a ratio of a ranking score for the feature map layer to a sum of such ranking scores for all of the plurality of feature map layers. For example, if each $l$:th feature map layer is assigned a ranking score $w_l$, the overall ranking score for the $l$:th feature map layer may be defined as $w_l/(\sum_l' w_{l'})$.

In one or more embodiments of the method, the ranking of the plurality of feature map layers may depend on the first attribute. Phrased differently, the ranking of the feature map layers may be different for different attributes, which helps to take into account that different feature map layers may be more or less relevant (i.e. better or worser) for the classification of a particular type of attribute.

In one or more embodiments of the method, the method may further include identifying the main object proposal and the one or more other object proposals using a non-maximum suppression (NMS) operation.

In one or more embodiments of the method, the ANN entity may include a feature pyramid network (FPN) for providing the plurality of feature map layers. As mentioned before, FPNs may be particularly useful for detecting objects at different (spatial) scales, such as e.g. both larger and smaller objects in a same image.

In one or more embodiments of the method, the ANN entity comprises a plurality of convolutional layers for providing the different spatial resolutions.

In one or more embodiments of the method, the method is performed in/by a monitoring camera.

According to a second aspect of the present disclosure, there is provided a device for object attribute classification in an image. The device includes processing circuitry (such as a processor) that is configured to (as a result of e.g. executing instructions store in a memory of the device) cause the device to: obtain, from an output of an artificial neural network (ANN) entity trained to localize and classify objects in an image using a plurality of feature map layers associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers; identify, among the plurality of object proposals and based on their respective indicated object class confidence scores, a first set including a main object proposal and one or more other object proposals; obtain a ranking of the feature map layers from a least significant feature map layer to a most significant feature map layer; and determine an attribute class for the first attribute based on the one or more attribute class confidence scores of all members of the first set, including to take the ranking of the feature map layers associated with the one or more other object proposals, as well as object location overlaps of the main object proposal with the one or more other object proposals, into account as part of such determining. The device is thus configured to perform the method of the first aspect.

In one or more embodiments of the device, the processing circuitry is further configured to cause the device to perform any embodiment of the method as described herein.

In one or more embodiments of the device, the processing circuitry may be further configured to cause the device to implement the ANN entity.

In one or more embodiments of the device, the device is a monitoring camera.

According to a third aspect of the present disclosure, there is provided a computer program for object attribute classification in an image. The computer program is configured to, when executed by processing circuitry of a device (such as the device of the second aspect), cause the device to obtain, from an output of an artificial neural network (ANN) entity trained to localize and classify objects in an image using a plurality of feature map layers associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers; identify, among the plurality of object proposals and based on their respective indicated object class confidence scores, a first set including a main object proposal and one or more other object proposals; obtain a ranking of the feature map layers from a least significant feature map layer to a most significant feature map layer; and determine an attribute class for the first attribute based on the one or more attribute class confidence scores of all members of the first set, including to take the ranking of the feature map layers associated with the one or more other object proposals, as well as object location overlaps of the main object proposal with the one or more other object proposals, into account as part of such determining. The computer program is thus configured to cause the device to perform the method of the first aspect.

In one or more embodiments of the computer program, the computer program may be further configured to, when executed by the processing circuitry of the device, cause the device to perform any embodiment of the method of the first aspect as described herein.

According to a fourth aspect of the present disclosure, there is provided a computer program product. The computer program product includes a computer-readable storage medium storing a computer program (e.g. computer program code) according to the third aspect (or any embodiments thereof). As used herein, the computer-readable storage medium may e.g. be non-transitory, and be provided as e.g. a hard disk drive (HDD), solid state drive (SSD), USB flash drive, SD card, CD/DVD, and/or as any other storage medium capable of non-transitory storage of data. In other embodiments, the computer-readable storage medium may be transitory and e.g. correspond to a signal (electrical, optical, mechanical, or similar) present on e.g. a communication link, wire, or similar means of signal transferring, in which case the computer-readable storage medium is of course more of a data carrier than a data storing entity.

Other objects and advantages of the present disclosure will be apparent from the following detailed description, the drawings and the claims. Within the scope of the present disclosure, it is envisaged that all features and advantages described with reference to e.g. the method of the first aspect are relevant for, apply to, and may be used in combination with also the device of the second aspect, the computer program of the third aspect, and the computer program product of the fourth aspect, and vice versa.

## Brief description of the drawings

Exemplifying embodiments will be described below with reference to the accompanying drawings, on which:

Figure 1 schematically illustrates an exemplary image of a scene, wherein the scene includes two objects that are closely located and of different colors;

Figures 2A and 2B schematically illustrates various exemplary ANN architectures (or entities) according to embodiments of the present disclosure;

Figure 3A schematically illustrates exemplary data indicative of object proposals output by ANN architectures according to embodiments of the present disclosure;

Figure 3B schematically illustrates a visual representation of object locations as proposed by the data of Figure 3A;

Figure 3C schematically illustrates an erroneous object attribute classification resulting from application of conventional post-processing methods to the data of Figure 3A;

Figure 3D schematically illustrates an improved object attribute classification based on the data of Figure 3A according to embodiments of the present disclosure;

Figure 4 schematically illustrates a flowchart of an exemplary method of object attribute classification according to embodiments of the present disclosure;

Figures 5A and 5B schematically illustrates exemplary devices for object attribute classification according to embodiments of the present disclosure, and

Figure 6 schematically illustrates an exemplary computer program, computer program product and computer-readable storage medium according to the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

## Detailed description

In the present disclosure, analysis/processing of an image of a scene includes at least three operations, namely i) object locating, ii) object classification, and iii) classification of one or more object attributes.

Object locating includes to estimate where in an image of a scene the object is located. As one example, locating an object in an image may include outputting coordinates defining a box enclosing the object (a so-called "bounding box"), or any other way of identifying which pixels of the image that are considered to belong to the particular object. A same set of pixels may of course "belong" to multiple objects, e.g. if there are one or more objects at least partially hidden behind one or more other objects, and similar. A bounding box may for example be represented by coordinates of two of its opposite corners (such as e.g. $x_1, y_2$ for one corner, and $x_2, y_2$ for an opposite corner), or e.g. as a single coordinate (such as $x, y$) plus a width (e.g. w) and height (e.g. $h$) of the box (wherein the single coordinate is e.g. a center-coordinate of the box, or a coordinate of a corner of the box), or similar. The coordinates may be image coordinates. In other examples, a bounding box may instead be represented by offsets from a predefined box, and e.g. include scaling factors in case the identified bounding box is larger or smaller than the predefined box, and similar (such as when relying on so-called *anchor boxes*). Other ways of representing an estimated location of an object are of course also possible. Parameters such as coordinates and/or dimensions (such as height and width) may in some examples also be accompanied by respective uncertainty estimations in the coordinates and/or dimensions, and similar.

Object classification includes to estimate to what object class an object most likely belongs. Examples of object classes may include e.g. "human", "dog", "cat", "car", "motorcycle", etc. There may also be more general classes such as "living being", "animal", "vehicle", and so on. Exactly which object classes that are used depends on e.g. what type of scene one wants to analyze, and an ANN architecture may be trained accordingly to work with a particular set of object classes. Object classification may for example result in there being provided a set of confidence scores, where each confidence score is for a particular object class and indicates a certainty of the object belonging to that particular object class. A confidence score may for example be a decimal number between 0.0 and 1.0, wherein 0.0 means that the object is most likely not a member of that object class, where 1.0 means that the object is most likely a member of that object class, and where e.g. 0.5 means that it is uncertain whether the object belongs to that object class or not. Instead of decimal numbers, other representations are of course also possible, such as e.g. integer numbers corresponding to percentages 0-100% (where 0.0 is "0%" and 1.0 is "100%"), or similar. Consequently, as envisaged herein, object classification is not binary, and may instead result in a number of confidence scores for a number of (predefined) object classes.

Attributes may include things like "color", "shape", "size", "orientation", etc., of an object, and a plurality of attribute classes may be provided for each such attribute. For example, a set of possible color attribute classes "red", "green", "blue", etc., may be assumed for the attribute "color"; a set of possible shape attribute classes "square", "round", "triangular", etc., may be assumed for the attribute "shape", and so on. Attribute classification (for a particular attribute) thus includes estimating to which associated attribute class the particular attribute belongs. Just as for object classification, the result of such attribute classification may include one or more confidence scores indicating a certainty of the particular attribute belonging to a particular attribute class for that particular attribute.

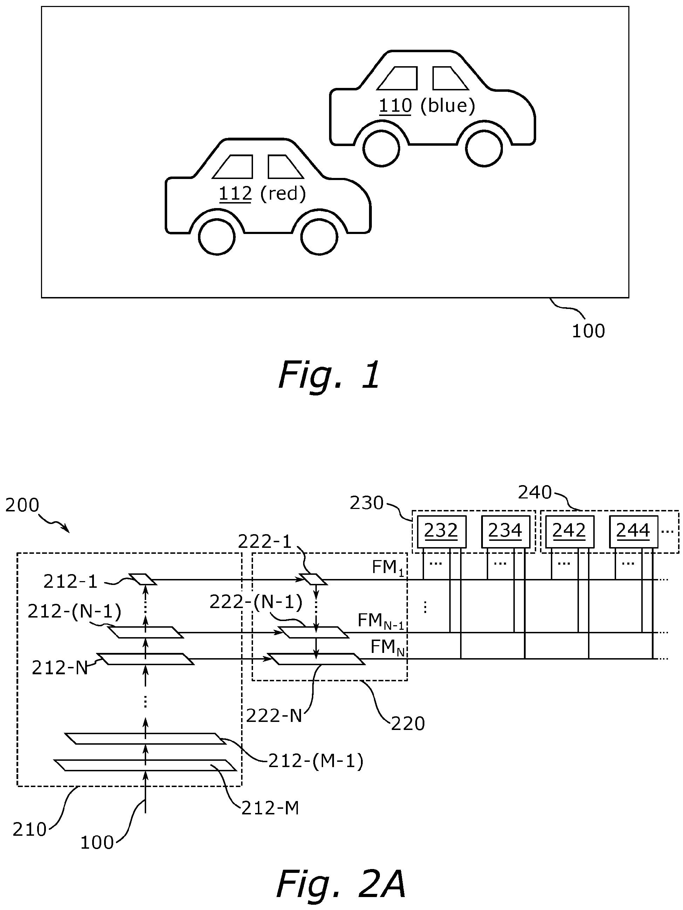

Figure 1 schematically illustrates an exemplary image 100 of a scene, which will repeatedly be used herein to illustrate the concept underlying the present disclosure. The scene captured in the image 100 includes two particular objects, in form of a first car 110 and a second car 112. The first car 110 is blue, and the second car 112 is red. The locations of the two objects 110 and 112 are as indicated in Figure 1. A correctly performed analysis/processing of the image 100 should therefore result in each object 110 and 112 being correctly located, correctly classified in terms of object class (i.e. with highest confidence scores for e.g. object class "car"), and also correctly classified in terms of color attribute (i.e. with highest confidence scores for e.g. color attribute classes "blue" and "red", respectively), if assuming that the color attribute is the only important attribute in this example.

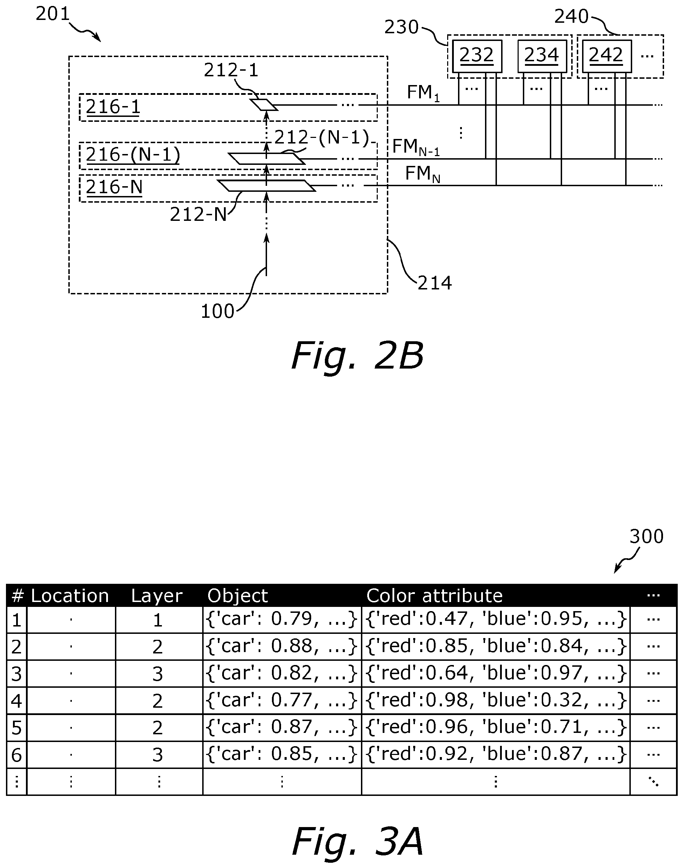

An example architecture for how to perform object locating, object classification as well as attribute classification will now be described in more detail with reference also to Figures 2A and 2B.

Figure 2A schematically illustrates an exemplary artificial neural network (ANN) architecture (or entity) 200 as envisaged herein. The architecture 200 includes a bottom-up pathway 210 as well as a top-down pathway 220. The bottom-up pathway 210 includes a plurality of convolutional stages 212-1 to 212-M each serving to further reduce the spatial resolution of the input image 100 (provided to the bottom-most stage 212-M, where M is an integer indicating a total number of stages in the bottom-up pathway 210). Each stage 212-1 to 212-M may include a single ANN layer or a set of interconnected ANN layers). The bottom-most convolutional stage 212-M may for example reduce the spatial resolution of the input image 100 by one half, by e.g. using a stride of two. The output of the stage 212-M is provided as input to the next convolutional stage 212-(M-1), which may further reduce the spatial resolution (by e.g. also one half, by e.g. using a stride of two), and so on. Consequently, spatial resolution decreases when moving upwards in the bottom-up pathway 210, while the semantic information provided at each stage instead increases. The bottom-up pathway, or at least the upper part of the bottom-up pathway, is responsible for (i.e. trained for) performing feature extraction at various levels for different scales of object, and results in a plurality of feature maps at different resolutions. The bottom-up pathway 210 may e.g. be a Residual Neural Network (i.e. ResNet, as described in more detail in Kaiming He et al., Deep Residual Learning for Image Recognition, https://doi.org/10.48550/arXiv.1512.03385), a Self-Regulated Network (i.e. RegNet, as described in more detail in Jing Xu et al., RegNet: Self-Regulated Network for Image Classification, https://doi.org/10.48550/arXiv.2101.00590), or any other suitable network architecture for providing feature maps based on different scales/resolutions. The bottom-up pathway 210 and its various stages 212-1 to 212-M may e.g. be referred to as a "backbone" of the architecture 200.

The top-down pathway 220 includes a plurality of stages 222-1 to 222-N (where N is an integer indicating a total number of such stages, and wherein each stage may include one or more interconnected ANN layers). Each such stage 222-j receives as input the feature map of an associated stage 212-j of the bottom-up pathway 210, and in addition also receives (except for the top-most stage 222-1) as input the output from a higher stage in the top-down pathway 210. The top-down pathway 220 and its stages 222-1 to 222-N may e.g. be referred to as a "neck" of the architecture 200, and may for example provide various up-sampling and concatenation mechanisms to fusion different stage feature maps. Phrased differently, the backbone 210 performs initial feature extraction from the input image 100 at different scales, while the neck 220 merges those features into more sophisticated feature maps $FM_j$, e.g. by performing multi-resolution aggregation of features extracted by the backbone 210. The number M of stages is usually smaller than N, as providing also the outputs from the higher-resolution stages 212-(N+1) to 212-M of the bottom-up pathway 210 directly to the top-down pathway 220 may often be considered as too computationally expensive. The top-down pathway 220 may for example be implemented in accordance with a so-called Feature Pyramid Network (FPN, as described in more detail in Tsung-Yi Lin et al., Feature Pyramid Networks for Object Detection, https://doi.org/10.48550/arXiv.1612.03144), or an extended variant of FPN (e.g. BiFPN, as described in more detail in Mingxing Tan et al., EfficientDet: Scalable and Efficient Object Detection, https://doi.org/10.48550 / arXiv.1911.09 070).

The feature maps $FM_j$ are then provided as input to a plurality of "head" modules of the architecture 200, including a group 230 of head modules responsible for object classification and localization, and a group 240 of one or more head modules responsible for object attribute classification. The group 230 includes e.g. an object classification module 232 configured to, based on the feature maps $FM_j$, determine whether there is an object in the image 100, and if yes also attempt to determine to which object class the object belongs. The module 232 may provide a plurality of such classifications originating from different ones of the plurality of feature maps $FM_j$. For example, the module 232 may be configured to provide one or more confidence scores for the object belonging to one or more object classes based on a particular one of the feature maps $FM_j$, and also provide one or more other confidence scores for the object belonging to the one or more object classes based on a particular other one of the feature maps $FM_{j'\neq j}$, and so on. Such an object classification module 232 may for example be or be based on a Single Shot Detector (SSD, as described in more detail in Wei Liu et al., SSD: Single Shot MultiBox Detector, https://doi.org/10.48550/arXiv.1512.02325) using convolutional predictors for detection, or e.g. on Retinanet (as described in more detail in Tsung-Yi Lin et al., Focal Loss for Dense Object Detection, https://doi.org/10.48550/arXiv.1708.02002). The group 230 may further include an object localization module 234, configured to localize where in the image 100 an object is, and provide the result e.g. in form of a bounding box as described earlier herein. Such an object localization module 234 may e.g. provide one bounding box based on a particular one of the feature maps $FM_j$, and another bounding box based on a particular other one of the feature maps $FM_{j'\neq j}$, and so on. Such an object localization module 234 may for example also be based on any of the two example sources provided above for the object classification module 232, but with focus on e.g. prediction of offsets from anchor boxes instead of on object class prediction, or similar.

The group 240 may e.g. include a first attribute classification module 242 configured to determine to which attribute class a particular first attribute belongs, such as e.g. for the attribute "color" as described earlier herein. The group 240 may optionally also include one or more additional attribute classification modules, such as e.g. a second attribute classification module 244 configured to classify a particular other attribute, and so on. For example, the second attribute classification module 244 may be configured to classify a texture attribute, a shape attribute, a size attribute, an attribute regarding whether an object is on a road or not, some other context attribute, etc., and the present disclosure is not limited to any particular set of attributes and/or corresponding attribute classes. Just as for the modules 232 and 234, the attribute classification modules 242 and 244 in the group 240 may be configured to e.g. output one set of confidence scores for one or more attribute classes based on a particular one of the feature maps $FM_j$, and to e.g. output another set of confidence scores for the one or more attribute classes based on a particular other one of the feature maps $FM_{j'\neq j}$, and so on. Such attribute classification modules (e.g. 242, 244, etc.) may for example be based on same example technologies as described above for the group 230. Another example of how to implement an attribute classification module is described in Dong Liu et al., Simultaneous object localization and attribute classification using multitask deep neural networks, US11087130B2.

As a result of the output from the modules of the groups 230 and 240, the architecture 200 may be configured to provide data indicative of a plurality of object proposals, wherein each object proposal includes an estimated object location (from the module 234), one or more object class confidence scores (from the module 232) for the object belonging to one or more object classes, and one or more attribute class confidence scores (from the module 242 and/or 244) for one or more attribute classes for a particular attribute, wherein in particular each such object proposal is based on a particular one of the feature maps $FM_j$.

Figure 2B schematically illustrates another exemplary ANN architecture (or entity) 201 as envisaged herein, which is more general than the architecture 200 described with reference to Figure 2A. The architecture 201 highlights that it is not, within the present disclosure, important exactly how e.g. the backbone 210 and neck 220 of the architecture 200 are structured, or e.g. whether there exists both a backbone and a neck, etc., as long as there are at least a plurality of network layers 214 (or stages) (such 212-1 to 212-N) that operates (by e.g. extracting features) at different resolutions. The output from such network layers/stages 212-1 to 212-N may then e.g. be provided directly as the feature maps $FM_j$ to the head modules of the groups 230 and 240, or e.g. be further processed (by using e.g. the FPN described with reference to Figure 2A, or by any other suitable sub-architecture) before output as the feature maps $FM_j$. Thus, generally herein, it is said that each feature map $FM_j$ is associated with a particular feature map layer/stage 216-j as illustrated in Figure 2B, wherein the exact configuration/layout of each such feature map layer/stage 216-j is not important as long as the feature map layers/stages 216-j are associated with different spatial resolutions, and e.g. such that each object proposal may be referred to as being associated with a particular one of the plurality of feature map layers/stages 216-j.

As also illustrated in Figure 2B, it is envisaged that the architecture 201 (or any architecture as envisaged herein) may include for example only a single attribute classification module (such as 242).

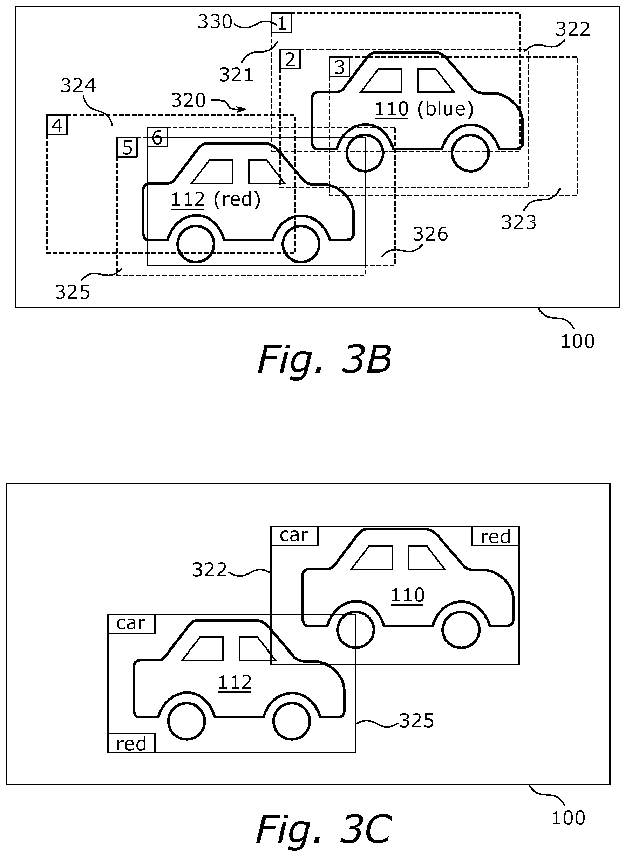

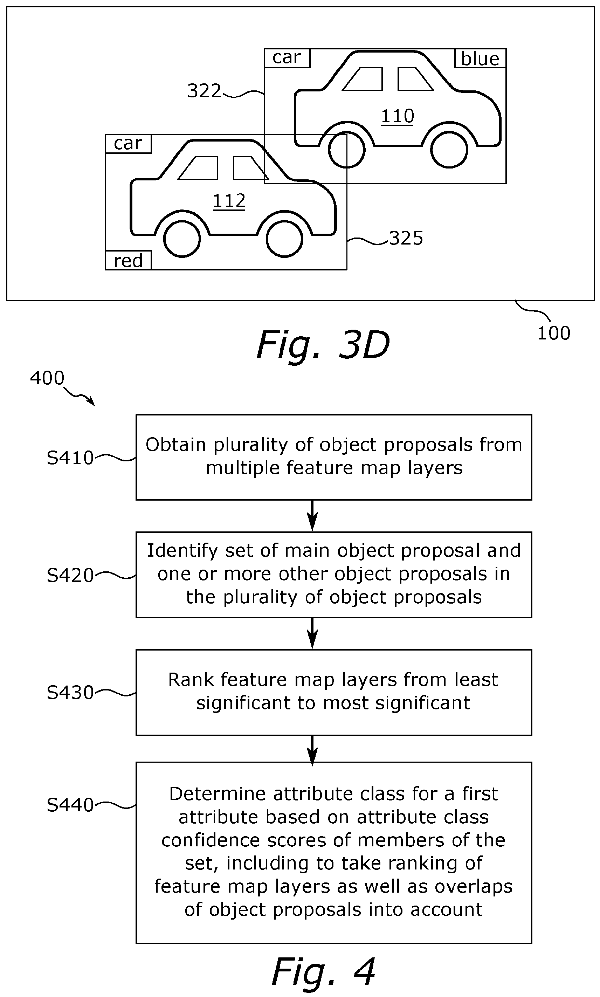

An example outcome of analyzing the image 100 of the scene using the architecture 200 or 201, as well as how the method envisaged herein may improve upon contemporary solutions of post-processing such an outcome, will now be described in more detail with reference also to Figures 3A, 3B, 3C and 3D.

Figure 3A illustrates an example output from the architecture 200/201 in form of tabulated data 300. In the data 300, each row corresponds to an object proposal, and includes a proposal index ("#", i.e. a bounding box index), an estimated object location ("Location", in form of coordinates for two opposite corners of the box, a center coordinate plus dimensions, etc., as described earlier herein, although not explicitly shown in Figure 3A), an identifier ("Layer") of the feature map layer (or stage, out of layers/stages 220-1 to 220-N) from which the object proposal originates (i.e. is associated with), confidence scores for one or more object classes ("Object", wherein the confidence score for each object class is provided as "<object class>": <confidence score>), and confidence scores for at least a first attribute here assumed to be the color attribute ("Color attribute", wherein the confidence score for each color attribute class is provided as "<color attribute class>": <confidence score>). Here, the confidence scores for the object classes and color attribute classes are provide using Javascript Object Notation (JSON), but other formats are of course also possible. For the object classes, only the confidence scores for the object class "car" are shown, but there may or may not be provided such confidence scores also for one or more other object classes.

Using the first row as an example, it is seen from the data 300 that this corresponds to a first (as # equals "1") object proposal (with a particular estimated location), that the object proposal originates from the first feature map layer (as Layer equals "1", i.e. the first object proposal is e.g. associated with the feature map layer 216-1 shown in Figure 2B), that it is indicated a confidence score of 0.79 for the object class "car" (as Object includes an item with key "car" and value "0.79"), and that the confidence scores for the color attribute classes are 0.48 for the attribute class "red" and 0.95 for the attribute class "blue" (as Color attribute includes an item with key "red" and value "0.47" as well as another item with key "blue" and value "0.95"). Similarly, the second row of the data 300 corresponds to a second object proposal originating from/associated with the second feature map layer (e.g. 216-2), with a confidence score of 0.88 for the object class "car", and confidence scores for color attribute classes "red" and "blue" of 0.85 and 0.84, respectively. The third row of the data 300 corresponds to a third object proposal originating from/associated with the third feature map layer (e.g. 216-3), with a confidence score of 0.82 for the object class "car", and confidence scores for color attribute classes "red" and "blue" of 0.64 and 0.97, respectively. The fourth row of the data 300 corresponds to a fourth object proposal originating from the second feature map layer, with a confidence score of 0.77 for the object class "car", and confidence scores for color attribute classes "red" and "blue" of 0.98 and 0.32, respectively. The fifth row of the data 300 corresponds to a fifth object proposal originating from the second feature map layer, with a confidence score of 0.87 for the object class "car", and confidence scores for color attribute classes "red" and "blue" of 0.96 and 0.71, respectively. The sixth row of the data 300 corresponds to a sixth object proposal originating from the third feature map layer, with a confidence score of 0.85 for the object class "car", and confidence scores for color attribute classes "red" and "blue" of 0.92 and 0.87, respectively. The data 300 may of course include one or more additional object proposals, that are however then ignored in the current example. For this particular example, it may thus be assumed that the architecture (e.g. 201) includes three feature map layers 216-1 to 216-3, i.e. $N = 3$.

More generally, it can, as envisaged herein, further be assumed that the architecture used to analyze the image 100 includes $N$ feature map layers, and that there is thus a corresponding set of different feature map layers $F = [F_1, F_2, ..., F_N]$ (where e.g. $F_j$ is feature map layer 216-j in Figure 2B). It can be assumed that there is a set of one or more different object classes $O = [O_1, O_2, ..., O_J]$, a set of one or more different attributes $A = [A_1, A_2, ..., A_P]$, and that for each such attribute $A_a$, there is a set of one or more different attribute classes $B_a = [B_{a,1}, B_{a,2}, ..., B_{a,K_a}]$, where $K_a$ is the number of possible attribute classes for attribute $A_a$. Data such as data 300 may then include a plurality of rows $r_i$ each corresponding to a particular $i$:th object proposal $OP_i$. Each object proposal $OP_i$ may indicate at least an estimated location $L_i$ of the object, an identifier $f_i$ of a feature map layer from which the object proposal originates (e.g. $f_i \rightarrow F$), one or more confidence scores $OC_{i,j}$ for each of one or more object classes $O_j \in O$, as well as one or more confidence scores $AC_{i,a,k}$ for each of one or more attributes $A_a$ and corresponding attribute classes $B_{a,k}$. For example, using the data 300 as shown in Figure 3A as an example, $F = [F_1, F_2, F_3]$; $O = [O_1 = "car", ...]$; $A = [A_1 "color", ...]$; and $B = [B_{1,1} "red", B_{1,2} "blue", ...]$ with $OC_{1,1}$ 0.79, $OC_{2,1} = 0.88$, $OC_{3,1} = 0.82$, $OC_{4,1} = 0.77$, $OC_{5,1} = 0.87$, $OC_{6,1} = 0.85$, ..., and $AC_{1,1,1} = 0.47$, $AC_{1,1,2} = 0.95$, $AC_{2,1,1} = 0.85$, $AC_{2,1,2} = 0.84$, $AC_{3,1,1} = 0.64$, $AC_{3,1,2} = 0.97$, $AC_{4,1,1} = 0.98$, $AC_{4,1,2} = 0.32$, $AC_{5,1,1} = 0.96$, $AC_{5,1,2} = 0.71$, $AC_{6,1,1} = 0.92$, $AC_{6,1,2} = 0.87$, ....

Figure 3B schematically illustrates exemplary object locations as proposed by the object proposals of the data 300, as a plurality of bounding boxes 320. The first object proposal $OP_1$ corresponds to a first bounding box 321, the second object proposal $OP_2$ corresponds to a second bounding box 322, the third object proposal $OP_3$ corresponds to a third bounding box 323, the fourth object proposal $OP_4$ corresponds to a fourth bounding box 324, the fifth object proposal $OP_5$ corresponds to a fifth bounding box 325, and the sixth object proposal $OP_6$ corresponds to a sixth bounding box 326, wherein the labels 330 in the upper left corner of each bounding box 320 indicates the number of the corresponding object proposal and row in data 300. In general, it can be seen that the estimated location $L_i$ of each object proposal $OP_i$ is here provided as a corresponding bounding box 32$i$.

In summary of Figures 3A and 3B, it is noted that there may be several different bounding boxes (i.e. several different object proposals) for each real object 110 and 112, and that there is a requirement to identify/estimate which of the many proposed bounding boxes (and object proposals) that corresponds to the actual location of the object by post-processing of the data 300.

One conventional technique regularly used for such a task is what is referred to as non-maximum suppression (NMS), which in turn relies on calculating so-called intersection-over-union (IOU) measures in order to identify which bounding box out of a plurality of boxes that correspond to the most likely true location of an object. In brief summary, NMS and IOU work as follows.

When provided with a list of object proposals, such as the tabular data 300, it is first checked which row corresponds to the highest confidence score for a particular object class $O_p \in 0$. For the sake of the current example, it can be assumed that the particular object class is that for "car, i.e. $O_1$. After investigating the data 300, it is found that the highest confidence score $O_{1,1}$ is found on row $i = 2$ (i.e. $OC_{2,1} = 0.88 > OC_{i \neq 2,1}$ Thus, location $L_2$ corresponding to bounding box 322 is selected as a main bounding box for the object belonging to object class "car". As a next step, IOU measures are calculated for all other object proposals, which includes finding the overlap between each bounding box 321, 323-326 and the main bounding box 322. Such an overlap may be defined, for two bounding boxes, as a ratio of an area of the intersection between the two bounding boxes to the combined area of the two boxes. For example, the intersection between two bounding boxes $BB_1$ and $BB_2$ may be defined as $|BB_1 \cap BB_2|$, and the combined area of the two bounding boxes as $|BB_1 \cup BB_2|$, leading to an estimated IOU for the two boxes being $IOU_{1,2} = |BB_1 \cap BB_2|/|BB_1 \cup BB_2|$. Phrased differently, one may calculate a set of such intersection-over-unions $IoU_{i=2,i\neq2}$ for each of the object proposals $OP_{i\neq2}$ not corresponding to the main bounding box 322. Of course, the IOU of the main bounding box with itself is by such a definition equal to one, i.e. $IOU_{2,2} = 1.0$.

Once the IOUs between each of the bounding boxes 321, 323-326 and the main bounding box 322 are found, a next step of the NMS operation includes to check whether each of these IOUs exceeds a predefined threshold value (e.g. $IOU_{th}$). The corresponding ones of the bounding boxes 321, 323-326 for which the IOUs with the main bounding box exceed $IOU_{th}$ are discarded from the list and not further considered. The corresponding ones of the bounding boxes 321, 323-326 for which the IOUs with the main bounding do not exceed $IOU_{th}$ are also discarded from the list, but instead placed on a list of potential candidate bounding boxes (i.e. candidate object proposals) for *one or more other* objects in the scene.

As an example, the various IOUs may be estimated as $IOU_{2,1} = 0.54$, $IOU_{2,3} = 0.61$, $IOU_{2,4} = 0.02$, $IOU_{2,5} = 0.07$, and $IOU_{2,6} = 0.11$. A threshold value may be assumed to be e.g. $IOU_{th} = 0.2$, and it may thus be concluded that only the bounding boxes 321 and 323 have overlaps with the main bounding box 322 that exceed the threshold $IOU_{th}$. Bounding boxes 321 and 323 are then assumed to be inaccurate localizations of the same object as that of bounding box 322, due to them having sufficiently large overlaps with the location indicated by object proposal $OP_2$ and bounding box 322. Likewise, the other boxes 324-326 are considered as not being inaccurate localizations of the same object as that of bounding box 322, and are instead added to the list of candidate proposals for one or more other objects. The process is then repeated for this other list. Out of bounding boxes 324-326 and their corresponding object proposals $OP_4$, $OP_5$ and $OP_6$ in the data 300, it is determined that object proposal $OP_5$ and bounding box 325 correspond to the highest confidence score for the object class "car" (i.e. $OC_{5,1} = 0.87$). New IOUs for the remaining boxes 324 and 326 may then be determined as e.g. $IOU_{5,4} = 0.43$ and $IOU_{5,6} = 0.69$, and by using the same threshold $IOU_{th} = 0.2$ it may be further determined that both of these measures are above the predefined threshold $IOU_{th}$, resulting in both proposals $OP_4$ and $OP_6$ and their bounding boxes being discarded also from this other list and not further considered.

As a result of having performed such a conventional NMS operation on the data 300, object proposal $OP_2$ is thus selected as the main proposal for one object, and object proposal $OP_5$ is selected as the main proposal of another object, and the other object proposals are discarded. In order to decide upon what the most likely attribute class is for e.g. the color attribute, the corresponding attribute class confidence scores found in $OP_2$ and $OP_5$ are examined, and it is found that for the object 110 of object proposal $OP_2$, the most likely attribute class for the color attribute is "red" (as $AC_{2,1,1} = 0.85 > AC_{2,1,2} = 0.84$). Likewise, for the object 112 of object proposal $OP_5$, the most likely attribute class for the color attribute is also "red" (as $AC_{5,1,1} = 0.96 > AC_{5,1,2} = 0.71$). It should be noted that there is not necessarily any concept of "same" or "different" objects in the data 300, and that a purpose of the NMS routine is to establish whether there is likely more than one object in the image 100 of the scene.

The outcome of such conventional NMS-based analysis is thus as schematically illustrated in Figure 3C, wherein the first object 110 is identified as belonging to object class "car" and with a most likely color attribute class being "red", while the second object 112 is identified as also belonging to object class "car" with a most likely color attribute class also being "red", with the locations as provided by object proposals $OP_2$ and $OP_5$ and corresponding bounding boxes 322 and 325, respectively, as indicated in Figure 3C. It can thus be seen that both objects 110 and 112 are correctly located and classified in terms of object classes, but that the color attribute classification of the object 110 is wrong as it is assumed to be red instead of blue. This example thus serves to illustrates how conventional methods for object localization and classification can fail, especially when relying on conventional NMS.

How the present disclosure improves upon contemporary and conventional methods for object localization and classification will now be described in more detail.

As the inventors have realized, conventional methods (such as described above with reference in particular to Figure 3C) does not appear to take into account that a particular feature map layer may be "good" at providing input useful for estimating/classifying a particular type of attribute, while a same feature map layer may be "less good" at providing input useful for estimating/classifying one or more other types of attributes. For example, higher resolution layers may be better at providing output useful for classification of attributes such as color and texture. Meanwhile, lower resolution layers may include more semantic information and be better at providing output useful for classification of attributes which requires more context, i.e. "contextual attributes", such as e.g. an attribute indicating whether an object is on a road or not, which would benefit from mix-up of information associated both with e.g. a car and with its surrounding elements (such as the road) as found in the lower-resolution layers. Similarly, lower-resolution layers may be better at providing output more useful for object classification, as it may be hard to detect objects in higher-resolution images with too many details still remaining and with less semantic content.

Using Figures 3A and 3B as examples, the best localization of the object 110 was provided based on output from the second feature map layer (e.g. 222-2), as part of object proposal $OP_2$, while the best classification of the color attribute was provided as part of object proposal $OP_3$ based on output from the third feature map layer (e.g. 222-3). This is in line with what is stated above, as the third feature map layer 222-3 has higher spatial resolution than the second feature map layer 222-2, and as the second feature map layer provides more semantic information than the third feature map layer. By using conventional NMS, however, the higher-quality prediction/classification of the color attribute provided by the object proposal $OP_3$ was discarded in favor of that provided by object proposal $OP_2$, solely due to $OP_2$ providing a higher confidence score for the classification of the object as belonging to object class "car". A reason for why object proposal $OP_2$ provided a higher confidence score for color attribute class "red" may e.g. have resulted from part of the red object/car 112 being within the bounding box 322, or e.g. due to a background around the blue object/car 110 being more reddish, or similar, and e.g. based on features that are all accumulated into the output from the second feature map layer 222-2 due to the lower-resolution input to the second feature map layer 222-2 resulting from the additional convolutions performed higher up in the bottom-up pathway 210 compared to the input provide to e.g. the third feature map layer 222-3.

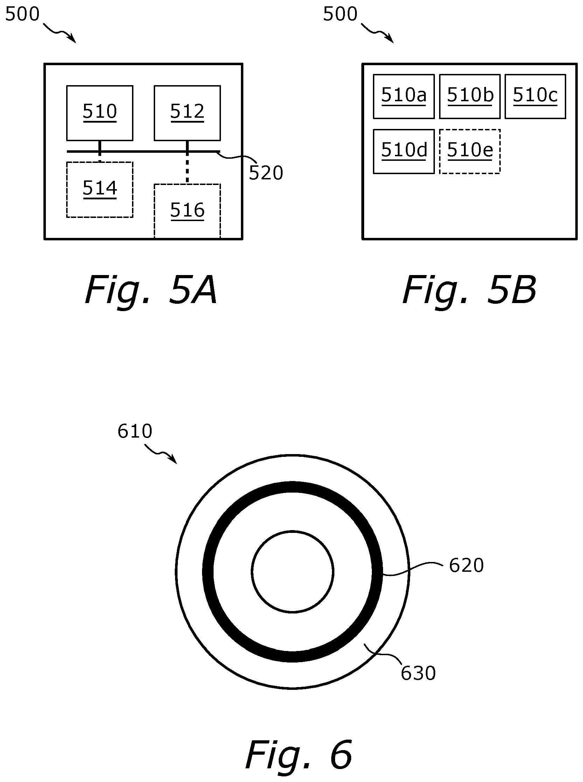

In order to overcome or at least partially alleviate the above issues, the present disclosure proposes an improved post-processing of data such as data 300 in order to better classify attributes, wherein also the origin of (e.g. from which feature map layer) the object proposals are taken into account. With reference also to Figures 4, 5A and 5C, such an improved post-processing will now be described in more detail.

Figure 4 schematically illustrates a flowchart of an exemplary method 400 of object attribute classification in an image, such as in the image 100. As part of an operation S410, the method 400 includes obtaining, from an output of an ANN entity (such as the architecture 200) trained to localize and classify objects in an image using a plurality of feature map layers (such as the layers/stages 316-j), a plurality of object proposals (such as object proposals $OP_1$ to $OP_6$) in a same image. Each $i$:th object proposal $OP_i$ includes an object class confidence score (such as $OC_{i,p}$) for a same first object class (e.g. $O_p \in O$), an estimated object location (e.g. $L_i$) in the image, and an attribute confidence score for each of one or more different attribute classes (e.g. $AC_{i,a,k}$, where $A_a \in A$ and $B_{a,k} \in B_a$) for a same first attribute (e.g. $A_q \in A$). Moreover, each object proposal $OP_i$ is associated with one of the feature map layers/stages, i.e. $f_i \rightarrow F$.

In an operation S420, the method 400 includes identifying, among the plurality of object proposals $OP_i$ and based on their respective indicated object class confidence scores $CO_{i,p}$, a first set including a main object proposal and one or more other object proposals. For example, using data 300 and Figure 3B as examples, the first set could include the object proposal $OP_2$ as the main object proposal, and e.g. object proposals $OP_1$ and $OP_3$ as the one or more other object proposals. In other examples, also one or more of object proposals $OP_4$ to $OP_6$ could be considered as part of the one or more other object proposals. Phrased differently, the method 400 includes to identify (based on object class confidence scores) a most likely object location, and to also identify one or more other proposals not corresponding to the most likely object location.

In an operation S430, which may be performed before, after or simultaneously with the operation S420, the method 400 includes ranking the feature map layers from a least significant feature map layer to a most significant feature map layer. The ranking may e.g. be the same for all attributes, or the ranking may be different for different attributes. For example, if the attribute is "color", feature map layers may be ranked according to their spatial resolution, with layers having higher spatial resolution being ranked as more significant than layers having lower resolutions. For example, if considering the first to third feature map layers used in the example of Figures 3A and 3B, it may be assumed that for the color attribute, the first feature map layer is the least significant layer, the third feature map layer is the most significant layer, and the second feature map layer is ranked somewhere in between the first and third layers. Ranking may e.g. be performed by assigning a weight coefficient $w_r$ to each $r$:th feature map layer, or similar, as will be described in more detail later herein. When ranking the feature map layers, there may of course, in some situations, be two or more feature map layers with a same ranking.

In an operation S440, the method 400 includes determining an attribute class for the first attribute (i.e. classifying the first attribute as belonging to a particular attribute class for that attribute) based on the one or more attribute class confidence scores $AC_{i,a,k}$ for the (all) members of the first set. This includes taking also the ranking of the feature map layers associated with the one or more other object proposals, as well as object location overlaps (e.g. IOUs) of the main object proposal with the one or more other object proposals, into account as part of this determining.

By not just automatically ranking the feature map layer responsible for providing the most likely object location (e.g. the highest object class confidence score) as the most significant (or only) feature map layer also for classifying the attribute, the present disclosure provides a solution that may improve upon e.g. the problem with contemporary solutions illustrated and described with reference to Figure 3C. This in particular by ranking the feature map layers depending on how "good" they are at providing useful output for classification of a particular type of attribute.

As described earlier herein, in some examples of the method 400, the locations of the object proposals may be provided as bounding boxes, and to determine object overlaps may include determining and using IOUs. For example, as shown already, this may include calculating $IOU_{i',i \neq i'}$ for each $i$:th of the one or more other object proposals that are not the $i'$:th object proposal considered to be the main object proposal.

In some examples of the method 400, taking the ranking and object location overlaps into account may include that an attribute class confidence score indicated by an object proposal that has a larger object overlap with the main object proposal and that is associated with a feature map layer that is ranked as more significant, is made more significant to determining the attribute class of the first attribute than an attribute class confidence score indicated by an object proposal that has a smaller overlap with the main object proposal and that is associated with a feature map layer that is ranked as less significant. For example, if the main object proposal is the $i$:th object proposal $OP_i$, and two of the one or more other object proposals are $j$:th and $j'$:th object proposals $OP_j$ and $OP_{j'}$, respectively, one may calculate $IOU_{i',j}$ and $IOU_{i',j'}$, and determine that $IOU_{i',j'} > IOU_{i',j}$. If further assuming that the feature map layer $f_{j'}$ is ranked as more significant than the layer $f_j$, it may be concluded that the attribute class confidence score $AC_{j',a,k'}$ should be made more significant when classifying the attribute $A_a$ than the confidence score $A_{j,a,k}$, where $k'$ and $k$ may or may not be different, and vice versa.

As envisaged herein, one particular example of how to more accurately determining the correct attribute class for the particular attribute $A_a$, as part of e.g. operation S440 of the method 400, can be described as follows.

For each particular attribute class $B_{a,k} \in B_a$ of the one or more attribute classes $B_a$ for the particular attribute $A_a$, it is iterated over the members of the first set that indicates an attribute class confidence score for the particular attribute class, i.e. over those members of the first set that has an attribute class confidence score $AC_{j,a,k}$. Using the example of Figures 3A and 3B, the particular attribute may e.g. be the color attribute $A_{a=1}$, and the one or more attribute classes may thus be $B_{a=1} = [B_{1,1}, B_{1,2}]$, e.g. attribute class "red" and "blue", respectively. If the first set is defined as including object proposals $OP_1$ to $OP_3$, iteration may thus be performed over $j = 1,2,3$, as all of $OP_1$ to $OP_3$ indicates an attribute class confidence score $AC_{j,a,k}$. If considering e.g. the first set to also include object proposals $OP_4$ to $OP_6$, iteration may instead be performed over $j = 1,2, ...,6$.

For each iteration, i.e. for each $j$, it may be determined a term $T_{j,a,k}$ that is equal or proportional to a product of an object location overlap size of the member of the first set with the main proposal, an overall ranking score for the feature map layer associated with the member, and the attribute class confidence score for the particular attribute class $k$ indicated by the member. For example, the term $T_j$ may be written as $T_{j,a,k} = T_j^{(1)} \times T_j^{(2)} \times T_{j,a,k}^{(3)}$, where $T_j^{(1)} = IOU_{i',j}$ is the overlap between object proposal $j$ and the main object proposal i'; where $T_j^{(2)} = R(f_j)$, where $R(f)$ is a function assigning a ranking value to feature map layer $f$, and where $T_{j,a,k}^{(3)} = AC_{j,a,k}$ is the attribute class confidence score indicated by the object proposal $j$ for the attribute class $k$ for attribute $a$.

It may then be determined an overall attribute class score $S_{a,k}$ for the particular attribute $a$ and attribute class $k$ (where $B_k \in A_a$), which is equal or proportional to a sum of the terms $T_j$ determined during the above-described iterating over the members of the first set that indicates the attribute class confidence score for the particular attribute class. For example, the overall attribute class score can be determined as $S_{a,k} = \Sigma_j T_{j,a,k}$, or similar, where $j = 1,2,3$ or e.g. $j = 1,2, ... ,6$ in this or these particular examples.

Finally, classification of the particular attribute can then be performed, as part of e.g. operation S440, by selecting the attribute class $B_{a,k'}$ for which the corresponding overall attribute class score $S_{a,k}$ is the highest, i.e. such that $k' = $ argmax $S_{a,k}$.

In some examples, iteration over j may be performed only over those object proposals for which the attribute class confidence score $AC_{j,a,k}$ is larger than all other attribute class confidence scores $AC_{j,a,k' \neq k}$ for the same attribute $a$. For example, for the tabulated data 300 of Figure 3A as an example, this would include iterating only over object proposals $OP_2$, $OP_4$, $OP_5$ and $OP_6$ when calculating $S_{1,1}$ (i.e. the overall score for the color attribute class "red" for the attribute "color"), and over object proposals $OP_1$ and $OP_3$ when calculating $S_{1,2}$ (i.e. the overall score for the color attribute class "blue" for the same attribute "color").

In some examples, the overall attribute class score $S_{a,k}$ for each particular attribute class $k$ may be defined as being inversely proportional to a number of the members of the first set that are iterated over. For example, if iterating over $J$ members (i.e. object proposals), it may be assumed that $S_{a,k} \propto 1/J$.

In some examples, the overall ranking score $R(f_j)$ for the particular feature map layer $f_j$ associated with the object proposal $OP_j$ may be defined as a ratio of a ranking score for the feature map layer to a sum of such ranking scores for all of the plurality of feature map layers. For example, it may be determined that a ranking score for a particular m:th feature map layer, $R(F_m \in F)$, equals $R(F_m) = w_m / \sum_{l=1}^{M} w_l$ where $w_l$ is a ranking score assigned to the $l$:th feature map layer and $M$ is a total number of feature map layers.

In some examples, the overall attribute class score $S_{a,k}$ may be defined as

$$S_{a,k} = \frac{\sum_j \left( IOU_{i',j} \times R(f_j) \times AC_{j,a,k} \right)}{J}, \tag{1}$$

or e.g.

$$S_{a,k} = \frac{\sum_{j}\left(IOU_{i',j} \times \frac{w_j}{\sum_{j'} w_{j'}} \times AC_{j,a,k}\right)}{J}, \qquad (2)$$

where the iteration over $j$ is either for all object proposals $OP_j$ that has a corresponding attribute class confidence score $AC_{j,a,k}$, or only over the object proposals $OP_j$ for which $AC_{j,a,k}$ is larger than all the attribute class confidence scores $AC_{j,a,k'\neq k}$ for other attribute classes $k' \neq k$ for the particular attribute $a$. In the above formulations for $S_{a,k}$, $J$ is the total number of object proposals iterated over. In some examples, the object proposals for which the IOU with the main object proposal are zero may be left out of the iteration, as their zero $IOU_{i',j}$-terms will cancel any contribution from these object proposals to the overall attribute class score anyway.

In some examples, the ranking of the plurality of feature map layers may depend on the first attribute $a$, i.e. such that $R(f_j) \rightarrow R_a(f_j)$. This may be useful as whether a particular feature map layer is considered to provide "good" or "not as good" output for classifying a particular attribute may depend on the type of the attribute. For example, as mentioned before, higher-resolution feature map layers may be better at providing usable output for classifying of e.g. colors, textures, and similar, but perform worse at providing usable output for classifying more contextual attributes, such as whether an object is located on a road or not, and similar, and vice versa. The ranking of the feature map layers may thus be changed depending on the particular attribute a of interest.

In some examples, finding the main object proposal and the one or more other object proposals of the first set may be performed using NMS, as described earlier herein. For example, the object proposal with the highest object class confidence score $OC_{j,p}$ for the particular object class $O_p$ in question may be selected as the main object proposal, and the one or more other object proposals may be defined as the object proposals whose overlap with the main object proposal are large enough (i.e. above the predefined threshold $IOU_{th}$) to be discarded from the list. In other examples, the one or more object proposals may be all other object proposals, independent of whether their overlap with the main object proposal is larger than the threshold $IOU_{th}$ or not.

If reconsidering the example of Figures 3A and 3B as a validation of the proposed method, it may be determined that the object proposal $OP_2$ is the main object proposal, and that $IOU_{2,1} = 0.54$, $IOU_{2,3} = 0.61$, $IOU_{2,4} = 0.02$, $IOU_{2,5} = 0.07$, and $IOU_{2,6} = 0.11$ (with $IOU_{2,2} = 1.0$ by definition). In order to classify the attribute "color" (i.e. $A_1$) for the bounding box 322 corresponding to the main object proposal $OP_2$, one can use e.g. equation (1) above. An example ranking of the feature map layers 1, 2 and 3 could be $w_1 < w_2 < w_3$, as higher-resolution layers are considered better at outputting useful data for color attribute classification. For example, if assuming that $w_3 = 0.6$, $w_2 = 0.3$ and $w_1 = 0.1$, one obtains that

$$S_{1,1} = \frac{\sum_{j\in\{1,2,3\}}\left(IOU_{2,j} \times w_j \times AC_{j,1,1}\right)}{3} = 0.17$$

and

$$S_{1,2} = \frac{\sum_{j\in\{1,2,3\}}\left(IOU_{2,j} \times w_j \times AC_{j,1,2}\right)}{3} = 0.22.$$

Consequently, as the overall score $S_{1,2}$ for the color attribute class "blue" is larger than the overall score $S_{1,1}$ for the color attribute class "red", the object 110 would then correctly be classified as being blue instead of red, contrary to the result obtained using conventional NMS only. If instead iterating over all object proposals and not only the ones whose overlap exceed $IOU_{th}$, one obtains that

$$S_{1,1} = \frac{\sum_{j\in\{1,2,3,4,5,6\}}\left(IOU_{2,j} \times w_j \times AC_{j,1,1}\right)}{6} = 0.10$$

and

$$S_{1,2} = \frac{\sum_{j\in\{1,2,3,4,5,6\}}\left(IOU_{2,j} \times w_j \times AC_{j,1,2}\right)}{6} = 0.12,$$

i.e. the object 110 would still be correctly classified as "blue" as $S_{1,2} > S_{1,1}$.

For confirmation, it can also be confirmed that after having selected the object proposal $OP_5$ as the main object proposal for the object 112, one obtains (after determining that $IOU_{5,1} = 0.02$, $IOU_{5,2} = 0.07$, $IOU_{5,3} = 0.03$, $IOU_{5,4} = 0.43$, and $IOU_{5,6} = 0.69$, and by definition $IOU_{5,5} = 1.0$) that

$$S_{1,1} = \frac{\sum_{j \in \{4,5,6\}} (IOU_{5,j} \times w_j \times AC_{j,1,1})}{3} = 0.27$$

and

$$S_{1,2} = \frac{\sum_{j \in \{4,5,6\}} (IOU_{5,j} \times w_j \times AC_{j,1,2})}{3} = 0.01,$$

or that

$$S_{1,1} = \frac{\sum_{j \in \{1,2,34,5,6\}} (IOU_{5,j} \times w_j \times AC_{j,1,1})}{6} = 0.14$$

and

$$S_{1,2} = \frac{\sum_{j \in \{1,2,3,4,5,6\}} (IOU_{5,j} \times w_j \times AC_{j,1,2})}{6} = 0.11,$$

confirming that the object 112 would be correctly classified as red as $S_{1,1} > S_{1,2}$ independently of whether iteration is made over all object proposals or only the object proposals $OP_4$ and $OP_6$ whose IOUs exceed $IOU_{th}$ (including, of course, also $OP_5$).

As envisaged herein, ranking of the feature map layers can be performed manually based on e.g. user experience, or e.g. in a more automated fashion. For example, it is envisaged that e.g. the feature map layer scores (such as $w_l$) can be obtained by using an exhaustive search method to find the optimized weights/scores. For example, if assuming that a score $w_l$ should lie between 0 and 1, an automated procedure by start by assuming equals scores $w_l = 1$ to all such scores. Then, for the lower-resolution layers, the procedure may proceed by searching from e.g. 0.9 to 1.0 with an interval of 0.05 to, for a test data set, find a score that corresponds to a best average precision (AP) value or similar. As an example, hyperparameter optimization may be used to search for a particular set of parameters (e.g. feature map layer weights/scores) resulting in an optimal performance. Such optimization may be performed using one or more frameworks available for such purposes, such as e.g. Optuna (as described in more detail in Takuya Akiba et al., *Optuna: A Nextgeneration Hyperparameter Optimization Framework,* https://doi.org/10-4855o/arXiv.1907-10902).

Herein, it is also envisaged to provide a device, computer program and computer program product for object attribute classification in an image, as will now be described in more detail with reference also to Figures 5A, 5B and 6.

Figure 5A schematically illustrates a device 500 for object attribute classification in an image as discussed earlier herein, i.e. a device configured to perform e.g. the method 400 described with reference to Figure 4. The device 500 includes at least a processor (or "processing circuitry") 510 and optionally a memory 512. As used herein, a "processor" or "processing circuitry" may for example be any combination of one or more of a suitable central processing unit (CPU), multiprocessor, microcontroller ($\mu$C), digital signal processor (DSP), applicationspecific integrated circuit (ASIC), field-programmable gate-array (FPGA), graphics processing unit (GPU), etc., capable of executing software instructions stored in the memory 512. The memory 512 may be external to the processor 510, or may be internal to the processor 510. As used herein, a "memory" may be any combination of random-access memory (RAM) and read-only memory (ROM), or any other kind of memory capable of storing the instructions. The memory 512 contains (i.e. stores) instructions that, when executed by the processor 510, cause the device 500 to perform a method as described herein (i.e. the method 400 or any embodiments thereof). The device 500 may further include one or more additional items 514 which may, in some situations, be useful for performing the method. In some example embodiments, the device 500 may for example be a (video) camera, such as a (video) monitoring camera, and the additional item(s) 514 may then include e.g. an image sensor and for example one or more lenses for focusing light from a scene on the image sensor, such that the monitoring camera may capture images of a scene as part of performing the envisaged method. The additional item(s) 514 may also include e.g. various other electronics components needed for capturing the scene, e.g. to properly operate the image sensor and/or lenses as desired, and to gather information pertinent to e.g. a current orientation and/or focal length of the camera and lens(es), which can be used to e.g. establish a current FOV of the camera. Performing the method in a monitoring camera may be useful in that the processing is moved to "the edge", i.e. closer to where the actual scene is captured compared to if performing the post-processing of the object proposals somewhere else (such as at a more centralized processing server or similar). The device 500 may for example be connected to a network such that the results from performing the method may be transmitted to a user. For this purpose, the device 500 may include a network interface 516, which may be e.g. a wireless network interface (as defined in e.g. any of the IEEE 802.11 or subsequent standards, supporting e.g. Wi-Fi) or a wired network interface (as defined in e.g. any of the IEEE 802.3 or subsequent standards, supporting e.g. Ethernet). The network interface 516 may for example also support any other wireless standard capable of transferring encoded video, such as e.g. Bluetooth or similar. The various components 510, 512, 514 and 516 (if present) may be connected via one or more communication buses 520, such that these components may communicate with each other, and exchange data as required.

The device 500 may for example be a monitoring camera mounted or mountable on a building, e.g. in form of a PTZ-camera or e.g. a fisheye-camera capable of providing a wider perspective of the scene, or any other type of monitoring/surveillance camera. The device 500 may for example be a body camera, action camera, dashcam, or similar, suitable for mounting on persons, animals and/or various vehicles, or similar. The device 500 may for example be a smartphone or tablet which a user can carry and film a scene. In any such examples of the device 500, it is envisaged that the device 500 may include all necessary components (if any) other than those already explained herein, as long as the device 500 is still able to perform the method 400 or any embodiments thereof as envisaged herein. The various components of the device 500 may in some examples be further configured to implement an ANN architecture/entity as described herein, such as e.g. 200 or 201. In other examples, the device 500 may only be configured to receive an output from such an ANN architecture/entity and only perform the post-processing of the plurality of object proposals.

Figure 5B schematically illustrates one or more embodiments of the device 500 in terms of a number of functional/computing blocks 510a-510d. Each such block 510a-510d is responsible for performing a functionality in accordance with a particular operation of the method 400, as shown in the flowchart of Figure 4. For example, one such functional block 410a may be configured to obtain the output from the ANN entity (operation S410), another block 510b may be configured to identify the members of the first set (operation S420), another block 510c may be configured to rank (or obtain a ranking of) the feature map layers (operation S430), and another block 510d may be configured to determine the attribute class for the first attribute (operation S440). The device 500 may optionally include e.g. one or more additional function blocks 510e, such as e.g. a block for implementing the ANN architecture or similar.

In general terms, each functional module 510a-e may be implemented in hardware or in software. Preferably, one or more or all functional modules 510a-e may be implemented by the processing circuitry 510, possibly in cooperation with the storage medium/memory 512 and/or the communications interface 516. The processing circuitry 510 may thus be arranged to from the memory 512 fetch instructions as provided by a functional module 510a-e, and to execute these instructions and thereby perform any operations of the method 400 performed by/in the device 500 as disclosed herein.

Figure 6 schematically illustrates a computer program product 610 including a computer-readable means-/storage medium 630. On the computer storage medium 630, a computer program 620 can be stored, which computer program 620 can cause the processor 510 and thereto operatively coupled entities and devices, such as the communication interface 516 and the memory 512, of the device 500 to execute method 400 according to embodiments described herein with reference to e.g. Figures 2A, 2B, 3A, 3B, 3D, and 4. The computer program 620 and/or computer program product 610 may thus provide means for performing any operations of the method 400 performed by the device 500 as disclosed herein.

In the example of Figure 6, the computer program product 610 and computer-readable storage medium 630 are illustrated as an optical disc, such as a CD (compact disc) or a DVD (digital versatile disc) or a Blu-Ray disc. The computer program product 610 and computer-readable storage medium 630 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 620 is here schematically shown as a track on the depicted optical disk, the computer program 620 may be stored in any way which is suitable for the computer program product 610 and computer-readable storage medium 630.

In summary of the various embodiments presented herein, the present disclosure provides an improved way post-processing object proposals from an ANN architecture/entity that utilizes feature maps and feature map layers for multiple spatial resolutions. In particular, the present disclosure proposes to not just throw away information in an object proposal just because the particular feature map (layer) used to predict e.g. an object class was not particularly good at that task, as the same feature map (layer) may simultaneously excel at accurately classifying one or more attributes of the object. This because the task of object detection (often based on identifying e.g. contours and shapes instead of things like color, texture, and similar) is often more suitably performed on lower-resolution images, while the task of attribute classification (such as to identify color, texture, and similar) can be more suitable performed on higher-resolution images wherein such information (about e.g. color, texture, etc.) has not yet been lost. By taking into account a ranking of the feature map layers (in terms of their capability of attribute classification), as well as how well each object proposal overlaps (in object location) with a main object proposal, the risk of erroneously classifying a particular attribute as belonging to a wrong attribute class can be reduced. Another advantage is that the envisaged solution does not necessarily require to modify existing ANN-based architectures already used to provide the object proposals, but may instead be implemented solely as a post-processing of such object proposals.

Although features and elements may be described above in particular combinations, each feature or element may be used alone without the other features and elements or in various combinations with or without other features and elements. Additionally, variations to the disclosed embodiments may be understood and effected by the skilled person in practicing the claimed invention, from a study of the drawings, the disclosure, and the appended claims.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

**List of reference numerals**

| | |
|---|---|
| 100 | image of scene |
| 110, 112 | objects |
| 200, 201 | ANN architectures |
| 210 | bottom-up pathway |
| 212-j | convolutional stages |
| 214 | plurality of network layers |
| 216-j | feature map layers/stages |
| 220 | top-down pathway |
| 222-j | convolutional stages |
| 230 | head group |
| 232 | object classification module |
| 234 | object localization module |
| 240 | head group |
| 242, 244 | attribute classification modules |
| 300 | data |
| 320-326 | bounding boxes |
| 330 | bounding box index |
| 400 | method |
| S410, 420, 430, 440 | operations |
| 500 | device |
| 510 | processing circuitry |
| 512 | memory |
| 514 | additional circuitry/functionality |
| 516 | interface |
| 510a-e | functional blocks |
| 610 | computer program product |
| 620 | computer program |
| 630 | storage medium |

**Claims**

1. A computer-implemented method (400) of object attribute classification in an image (100), comprising:

- obtaining (S410), from an output of an artificial neural network, ANN, entity (200, 201) trained to localize and classify objects (110, 112) in an image using a plurality of feature map layers (216-j) associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers;
- identifying (S420), among the plurality of object proposals and based on their respective indicated object class confidence scores, a first set including a main object proposal and one or more other object proposals;
- ranking (S430), in terms of ability to extract information useful for classification of the first attribute, the feature map layers from a least significant feature map layer to a most significant feature map layer, and
- determining (S440) an attribute class for the first attribute based on the one or more attribute class confidence scores of all members of the first set, including taking the ranking of the feature map layers associated with the one or more other object proposals, as well as object location overlaps of the main object proposal with the one or more other object proposals, into account as part of said determining,

wherein determining the attribute class for the first attribute further comprises:

- for each particular attribute class of the one or more attribute classes:

  * iterating over members of the first set indicating an attribute class confidence score for the particular attribute class;
  * for each iteration, determining a term equal or proportional to a product of an object location overlap size of the member of the first set with the main object proposal, an overall ranking score for the feature map layer associated with the member, and the attribute class confidence score for the particular attribute class indicated by the member, and
  * determining an overall attribute class score for the particular attribute class as equal or proportional to a sum of the terms determined during the iterating;
  and

  - determining the attribute class for the first attribute as the attribute class having the highest overall attribute class score.

2. The method according to claim 1, wherein the object location of each object proposal is indicated as a bounding box (320-326), and wherein the method further comprises using an intersection-over-union, IOU, operation to determine the object location overlaps of the main object proposal (322) with the one or more other object proposals (321, 323-326).

3. The method according to claim 1 or 2, wherein taking the ranking and object location overlaps into account comprises that an attribute class confidence score indicated by an object proposal having a larger object overlap with the main object proposal and associated with a feature map layer ranked as more significant is made more significant to determining the attribute class of the first attribute than an attribute class confidence score indicated by an object proposal having a smaller object overlap with the main object proposal and associated with a feature map layer ranked as less significant.

4. The method according to any one of claims 1 to 3, wherein said iterating is performed only over members of the first set indicating a highest attribute class confidence score for the particular attribute class.

5. The method according to any one of the preceding claims, wherein the overall attribute class score for each particular attribute class is further defined as inversely proportional to a number of the members of the first set that are iterated over.

6. The method according to any one of the preceding claims, wherein the overall ranking score for the feature map layer associated with the member is defined as a ratio of a ranking score for the feature map layer to a sum of such ranking scores for all of the plurality of feature map layers.

7. The method according to any one of the preceding claims, wherein the ranking of the plurality of feature map layers depends on the first attribute.

8. The method according to any one of the preceding claims, further comprising to identify the main object proposal and the one or more other object proposals using a non-maximum suppression, NMS, operation.

9. The method according to any one of the preceding claims, wherein the ANN entity comprises a feature pyramid network, FPN, (220) for providing the plurality of feature map layers.

10. The method according to any one of the preceding claims, wherein the ANN entity comprises a plurality of convolutional layers (210) for providing the different spatial resolutions of the image.

11. A device (500) for object attribute classification in an image (100), the device comprising processing circuitry (510) configured to cause the device to:

- obtain, from an output of an artificial neural network, ANN, entity (200, 201) trained to localize and classify objects (110, 112) in an image (100) using a plurality of feature map layers (216-j) associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers;
- identify, among the plurality of object proposals and based on their respective indicated object class confidence scores, a first set including a main object proposal (322) and one or more other object proposals (321, 323-326);
- obtain a ranking, in terms of ability to extract information useful for classification of the first attribute, of the feature map layers from a least significant feature map layer to a most significant feature map layer, and
- determine an attribute class for the first attribute based on the one or more attribute class confidence scores of all members of the first set, including taking the ranking of the feature map layers associated with the one or more other object proposals, as well as object location overlaps of the main object proposal with the one or more other object proposals, into account as part of said determining,

wherein to determine the attribute class for the first attribute further comprises to:

- for each particular attribute class of the one or more attribute classes:

    * iterate over members of the first set indicating an attribute class confidence score for the particular attribute class;
    * for each iteration, determine a term equal or proportional to a product of an object location overlap size of the member of the first set with the main object proposal, an overall ranking score for the feature map layer associated with the member, and the attribute class confidence score for the particular attribute class indicated by the member, and
    * determine an overall attribute class score for the particular attribute class as equal or proportional to a sum of the terms determined during the iterating;

    and
- determine the attribute class for the first attribute as the attribute class having the highest overall attribute class score.

12. The device according to claim 11, wherein the processing circuitry is further configured to cause the device to implement the ANN entity (200, 201).

13. A computer program (620) for object attribute classification in an image (100), the computer program being configured to, when executed by processing circuitry (510) of a device (500), cause the device to:

- obtain, from an output of an artificial neural network, ANN, entity (200, 201) trained to localize and classify objects in an image (100) using a plurality of feature map layers (216-j) associated with different spatial resolutions, a plurality of object proposals in a same image, wherein each object proposal indicates at least i) an object class confidence score for a same first object class, ii) an estimated object location in the image, and iii) an attribute class confidence score for each of one or more different attribute classes for a same first attribute, and wherein each object proposal is associated with one of the feature map layers;
- identify, among the plurality of object proposals and based on their respective indicated object class confidence scores, a first set including a main object proposal (322) and one or more other object proposals (321, 323-326);
- obtain a ranking, in terms of ability to extract information useful for classification of the first attribute, of the feature map layers from a least significant feature map layer to a most significant feature map layer, and
- determine an attribute class for the first attribute based on the one or more attribute class confidence scores of all members of the first set, including taking the ranking of the feature map layers associated with the one or more other object proposals, as well as object location overlaps of the main object proposal with the one or more other object proposals, into account as part of said determining,

wherein to determine the attribute class for the first attribute further comprises to:

- for each particular attribute class of the one or more attribute classes:

* iterate over members of the first set indicating an attribute class confidence score for the particular attribute class;
* for each iteration, determine a term equal or proportional to a product of an object location overlap size of the member of the first set with the main object proposal, an overall ranking score for the feature map layer associated with the member, and the attribute class confidence score for the particular attribute class indicated by the member, and
* determine an overall attribute class score for the particular attribute class as equal or proportional to a sum of the terms determined during the iterating;

and
- determine the attribute class for the first attribute as the attribute class having the highest overall attribute class score.

14. A computer program product (610) comprising a computer-readable storage medium (630) storing a computer program (620) according to claim 13.

**Patentansprüche**

1. Computerimplementiertes Verfahren (400) zur Objektattributklassifizierung in einem Bild (100), umfassend:

- Erhalten (S410), von einer Ausgabe einer ANN(Artificial Neural Network)-Entität (200, 201), die dazu trainiert ist, Objekte (110, 112) in einem Bild unter Verwendung einer Vielzahl von Merkmalskartenschichten (216-j), die mit unterschiedlichen räumlichen Auflösungen assoziiert sind, zu lokalisieren und zu klassifizieren, einer Vielzahl von Objektvorschlägen in einem gleichen Bild, wobei jeder Objektvorschlag mindestens i) einen Objektklassen-Konfidenzwert für eine gleiche erste Objektklasse, ii) eine geschätzte Objektposition in dem Bild und iii) einen Attributklassen-Konfidenzwert für jede von einer oder mehreren unterschiedlichen Attributklassen für ein gleiches erstes Attribut angibt, und wobei jeder Objektvorschlag mit einer der Merkmalskartenschichten assoziiert ist;
- Identifizieren (S420), aus der Vielzahl von Objektvorschlägen und basierend auf deren jeweiligen angegebenen Objektklassen-Konfidenzwerten, eines ersten Satzes, der einen Hauptobjektvorschlag und einen oder mehrere andere Objektvorschläge enthält;
- Einstufen (S430), in Bezug auf die Fähigkeit, Informationen zu extrahieren, die zur Klassifizierung des ersten Attributs nützlich sind, der Merkmalskartenschichten von einer am wenigsten signifikanten Merkmalskartenschicht zu einer am stärksten signifikanten Merkmalskartenschicht, und
- Bestimmen (S440) einer Attributklasse für das erste Attribut basierend auf dem einen oder den mehreren Attributklassen-Konfidenzwerten aller Mitglieder des ersten Satzes, einschließlich des Berücksichtigens der Einstufung der Merkmalskartenschichten, die mit dem einen oder den mehreren anderen Objektvorschlägen assoziiert sind, sowie von Objektpositionsüberschneidungen des Hauptobjektvorschlags mit dem einen oder den mehreren anderen Objektvorschlägen, als Teil des Bestimmens.

wobei das Bestimmen der Attributklasse für das erste Attribut ferner umfasst:

- für jede jeweilige Attributklasse der einen oder mehreren Attributklassen:

* Iterieren über Mitglieder des ersten Satzes, die einen Attributklassen-Konfidenzwert für die jeweilige Attributklasse angeben;
* für jede Iteration, Bestimmen eines Terms gleich oder proportional zu einem Produkt aus einer Objektpositionsüberschneidungsgröße des Mitglieds des ersten Satzes mit dem Hauptobjektvorschlag, einem Gesamteinstufungswert für die Merkmalskartenschicht, die mit dem Mitglied assoziiert ist, und dem Attributklassen-Konfidenzwert für die jeweilige Attributklasse, die durch das Mitglied angegeben wird, und
* Bestimmen eines Gesamtattributklassenwerts für die jeweilige Attributklasse als gleich oder proportional zu einer Summe der Terme, die während des Iterierens bestimmt werden;

und
- Bestimmen der Attributklasse für das erste Attribut als die Attributklasse mit dem höchsten Gesamtattributklassenwert.

2. Verfahren nach Anspruch 1, wobei die Objektposition jedes Objektvorschlags als eine Begrenzungsbox (320-326) angegeben wird, und wobei das Verfahren ferner das Verwenden einer Schnittpunkt-über-Vereinigung(Intersection-over-Union, IOU)-Operation umfasst, um die Objektpositionsüberschneidungen des Hauptobjektvorschlags (322) mit dem einen oder den mehreren anderen Objektvorschlägen (321, 323-326) zu bestimmen.

3. Verfahren nach Anspruch 1 oder 2, wobei ein Berücksichtigen der Einstufung und der Objektpositionsüberschneidungen umfasst, dass ein Attributklassen-Konfidenzwert, der durch einen Objektvorschlag angegeben wird, der eine größere Objektüberschneidung mit dem Hauptobjektvorschlag aufweist und mit einer als signifikanter eingestuften Merkmalskartenschicht assoziiert ist, für das Bestimmen der Attributklasse des ersten Attributs als signifikanter erachtet wird als ein Attributklassen-Konfidenzwert, der durch einen Objektvorschlag angegeben wird, der eine kleinere Objektüberschneidung mit dem Hauptobjektvorschlag aufweist und mit einer als weniger signifikant eingestuften Merkmalskartenschicht assoziiert ist.

4. Verfahren nach einem der Ansprüche 1 bis 3, wobei das Iterieren nur über Mitglieder des ersten Satzes, die einen höchsten Attributklassen-Konfidenzwert für die jeweilige Attributklasse angeben, durchgeführt wird.

5. Verfahren nach einem der vorhergehenden Ansprüche, wobei der Gesamtattributklassenwert für jede jeweilige Attributklasse ferner als umgekehrt proportional zu einer Anzahl der Mitglieder des ersten Satzes, über die iteriert wird, definiert ist.

6. Verfahren nach einem der vorhergehenden Ansprüche, wobei der Gesamteinstufungswert für die Merkmalskartenschicht, die mit dem Mitglied assoziiert ist, als ein Verhältnis eines Einstufungswerts für die Merkmalskartenschicht zu einer Summe solcher Einstufungswerte für alle der Vielzahl von Merkmalskartenschichten definiert ist.

7. Verfahren nach einem der vorhergehenden Ansprüche, wobei die Einstufung der Vielzahl von Merkmalskartenschichten vom ersten Attribut abhängt.

8. Verfahren nach einem der vorhergehenden Ansprüche, ferner umfassend das Identifizieren des Hauptobjektvorschlags und des einen oder der mehreren anderen Objektvorschläge unter Verwendung einer Nicht-Maximum-Unterdrückungs(NMS)-Operation.

9. Verfahren nach einem der vorhergehenden Ansprüche, wobei die ANN-Entität ein Merkmalspyramidennetz, FPN, (220) zum Bereitstellen der Vielzahl von Merkmalskartenschichten umfasst.

10. Verfahren nach einem der vorhergehenden Ansprüche, wobei die ANN-Entität eine Vielzahl von Faltungsschichten (210) zum Bereitstellen der unterschiedlichen räumlichen Auflösungen des Bildes umfasst.

11. Vorrichtung (500) zur Objektattributklassifizierung in einem Bild (100), wobei die Vorrichtung eine Verarbeitungsbeschaltung (510) umfasst, die dazu konfiguriert ist, die Vorrichtung zu Folgendem zu veranlassen:

- Erhalten, von einer Ausgabe einer ANN(Artificial Neural Network)-Entität (200, 201), die trainiert ist, um Objekte (110, 112) in einem Bild (100) unter Verwendung einer Vielzahl von Merkmalskartenschichten (216-j), die mit unterschiedlichen räumlichen Auflösungen assoziiert sind, zu lokalisieren und zu klassifizieren, einer Vielzahl von Objektvorschlägen in einem gleichen Bild, wobei jeder Objektvorschlag mindestens i) einen Objektklassen-Konfidenzwert für eine gleiche erste Objektklasse, ii) eine geschätzte Objektposition in dem Bild und iii) einen Attributklassen-Konfidenzwert für jede von einer oder mehreren unterschiedlichen Attributklassen für ein gleiches erstes Attribut angibt, und wobei jeder Objektvorschlag mit einer der Merkmalskartenschichten assoziiert ist;
- Identifizieren, aus der Vielzahl von Objektvorschlägen und basierend auf deren jeweiligen angegebenen Objektklassen-Konfidenzwerten, eines ersten Satzes, der einen Hauptobjektvorschlag (322) und einen oder mehrere andere Objektvorschläge (321, 323-326) enthält;
- Erhalten einer Einstufung, in Bezug auf die Fähigkeit, Informationen zu extrahieren, die zur Klassifizierung des ersten Attributs nützlich sind, der Merkmalskartenschichten von einer am wenigsten signifikanten Merkmalskartenschicht zu einer am stärksten signifikanten Merkmalskartenschicht, und
- Bestimmen einer Attributklasse für das erste Attribut basierend auf dem einen oder den mehreren Attributklassen-Konfidenzwerten aller Mitglieder des ersten Satzes, einschließlich des Berücksichtigens der Einstufung der mit dem einen oder den mehreren anderen Objektvorschlägen assoziierten Merkmalskartenschichten, sowie von Objektpositionsüberschneidungen des Hauptobjektvorschlags mit dem einen oder den mehreren anderen Objektvorschlägen als Teil des Bestimmens,

wobei das Bestimmen der Attributklasse für das erste Attribut ferner Folgendes umfasst:

- für jede jeweilige Attributklasse der einen oder mehreren Attributklassen:

* Iterieren über Mitglieder des ersten Satzes, die einen Attributklassen-Konfidenzwert für die jeweilige Attributklasse angeben;
* für jede Iteration, Bestimmen eines Terms gleich oder proportional zu einem Produkt aus einer Objektpositionsüberschneidungsgröße des Mitglieds des ersten Satzes mit dem Hauptobjektvorschlag, einem Gesamteinstufungswerts für die Merkmalskartenschicht, die mit dem Mitglied assoziiert ist, und dem Attributklassen-Konfidenzwert für die jeweilige Attributklasse, die durch das Mitglied angegeben wird, und
* Bestimmen eines Gesamtattributklassenwerts für die jeweilige Attributklasse als gleich oder proportional zu einer Summe der Terme, die während des Iterierens bestimmt werden;

und
- Bestimmen der Attributklasse für das erste Attribut als die Attributklasse mit dem höchsten Gesamtattributklassenwert.

12. Vorrichtung nach Anspruch 11, wobei die Verarbeitungsbeschaltung ferner dazu konfiguriert ist, die Vorrichtung zu veranlassen, die ANN-Entität (200, 201) zu implementieren.

13. Computerprogramm (620) zur Objektattributklassifizierung in einem Bild (100), wobei das Computerprogramm dazu konfiguriert ist, bei Ausführung durch eine Verarbeitungsbeschaltung (510) einer Vorrichtung (500) die Vorrichtung zu Folgendem zu veranlassen:

- Erhalten, von einer Ausgabe einer ANN(Artificial Neural Network)-Entität (200, 201), die trainiert ist, um Objekte in einem Bild (100) unter Verwendung einer Vielzahl von Merkmalskartenschichten (216-j), die mit unterschiedlichen räumlichen Auflösungen assoziiert sind, zu lokalisieren und zu klassifizieren, einer Vielzahl von Objektvorschlägen in einem gleichen Bild, wobei jeder Objektvorschlag mindestens i) einen Objektklassen-Konfidenzwert für eine gleiche erste Objektklasse, ii) eine geschätzte Objektposition in dem Bild und iii) einen Attributklassen-Konfidenzwert für jede von einer oder mehreren unterschiedlichen Attributklassen für ein gleiches erstes Attribut angibt, und wobei jeder Objektvorschlag mit einer der Merkmalskartenschichten assoziiert ist;
- Identifizieren, aus der Vielzahl von Objektvorschlägen und basierend auf deren jeweiligen angegebenen Objektklassen-Konfidenzwerten, eines ersten Satzes, der einen Hauptobjektvorschlag (322) und einen oder mehrere andere Objektvorschläge (321, 323-326) enthält;
- Erhalten einer Einstufung, in Bezug auf die Fähigkeit, Informationen zu extrahieren, die zur Klassifizierung des ersten Attributs nützlich sind, der Merkmalskartenschichten von einer am wenigsten signifikanten Merkmalskartenschicht zu einer am stärksten signifikanten Merkmalskartenschicht, und
- Bestimmen einer Attributklasse für das erste Attribut basierend auf dem einen oder den mehreren Attributklassen-Konfidenzwerten aller Mitglieder des ersten Satzes, einschließlich des Berücksichtigens der Einstufung der mit dem einen oder den mehreren anderen Objektvorschlägen assoziierten Merkmalskartenschichten, sowie von Objektpositionsüberschneidungen des Hauptobjektvorschlags mit dem einen oder den mehreren anderen Objektvorschlägen als Teil des Bestimmens,

wobei das Bestimmen der Attributklasse für das erste Attribut ferner Folgendes umfasst:

- für jede jeweilige Attributklasse der einen oder mehreren Attributklassen:

* Iterieren über Mitglieder des ersten Satzes, die einen Attributklassen-Konfidenzwert für die jeweilige Attributklasse angeben;
* für jede Iteration, Bestimmen eines Terms gleich oder proportional zu einem Produkt aus einer Objektpositionsüberschneidungsgröße des Mitglieds des ersten Satzes mit dem Hauptobjektvorschlag, einem Gesamteinstufungswert für die Merkmalskartenschicht, die mit dem Mitglied assoziiert ist, und dem Attributklassen-Konfidenzwert für die jeweilige Attributklasse, die durch das Mitglied angegeben wird, und
* Bestimmen eines Gesamtattributklassenwerts für die jeweilige Attributklasse als gleich oder proportional zu einer Summe der Terme, die während des Iterierens bestimmt werden;

und

- Bestimmen der Attributklasse für das erste Attribut als die Attributklasse mit dem höchsten Gesamtattributklassenwert.

14. Computerprogrammprodukt (610), umfassend ein computerlesbares Speichermedium (630), das ein Computerprogramm (620) nach Anspruch 13 speichert.

**Revendications**

1. Procédé (400), mis en œuvre par ordinateur, de classification d'attributs d'objets dans une image (100), comprenant :

- l'obtention (S410) à partir d'une sortie d'une entité (200, 201) de réseau de neurones artificiels, ANN, entraînée à localiser et classifier des objets (110, 112) dans une image à l'aide d'une pluralité de couches (216-j) de carte de caractéristiques associées à des résolutions spatiales différentes, d'une pluralité de propositions d'objets dans une même image, chaque proposition d'objet indiquant au moins i) un score de confiance de classe d'objets pour une même première classe d'objets, ii) un emplacement d'objet estimé dans l'image, et iii) un score de confiance de classe d'attributs pour chacune d'une ou plusieurs classes d'attributs différentes pour un même premier attribut, et chaque proposition d'objet étant associée à une des couches de carte de caractéristiques ;
- l'identification (S420), parmi la pluralité de propositions d'objets et sur la base de leurs scores indiqués respectifs de confiance de classe d'objets, d'un premier ensemble incluant une proposition principale d'objet et une ou plusieurs autres propositions d'objet ;
- le classement (S430), en termes de capacité à extraire des informations utiles pour la classification du premier attribut, des couches de carte de caractéristiques en allant d'une couche de carte de caractéristiques la moins significative à une couche de carte de caractéristiques la plus significative, et
- la détermination (S440) d'une classe d'attributs pour le premier attribut sur la base du ou des scores de confiance de classe d'attributs de tous les membres du premier ensemble, ce qui inclut la prise en compte du classement des couches de cartes de caractéristiques associées à l'autre ou aux autres propositions d'objet, ainsi que des chevauchements d'emplacements d'objets de la proposition principale d'objet avec l'autre ou les autres propositions d'objet, dans le cadre de ladite détermination,

la détermination de la classe d'attributs pour le premier attribut comprenant en outre :

- pour chaque classe d'attributs particulière parmi la ou les classes d'attributs :

   * le fait d'itérer sur des membres du premier ensemble indiquant un score de confiance de classe d'attributs pour la classe d'attributs particulière ;
   * pour chaque itération, la détermination d'un terme égal ou proportionnel à un produit d'une taille de chevauchement d'emplacement d'objet du membre du premier ensemble avec la proposition principale d'objet, un score de classement global pour la couche de carte de caractéristiques associée au membre, et le score de confiance de classe d'attributs pour la classe d'attributs particulière indiqué par le membre, et
   * la détermination d'un score global de classe d'attributs pour la classe d'attributs particulière comme étant égal ou proportionnel à une somme des termes déterminés pendant les itérations ;

   et
- la détermination de la classe d'attributs pour le premier attribut comme la classe d'attributs ayant le score global de classe d'attributs le plus élevé.

2. Procédé selon la revendication 1, l'emplacement d'objet de chaque proposition d'objet étant indiqué sous la forme d'un rectangle (320-326) de délimitation, et le procédé comprenant en outre l'utilisation d'une opération d'intersection sur union, IOU, pour déterminer les chevauchements d'emplacements d'objets de la proposition principale (322) d'objet avec l'autre ou les autres propositions (321, 323-326) d'objet.

3. Procédé selon la revendication 1 ou 2, la prise en compte des chevauchements de classement et d'emplacement d'objet comprenant le fait qu'un score de confiance de classe d'attributs indiqué par une proposition d'objet ayant un chevauchement d'objets plus important avec la proposition principale d'objet et associé à une couche de carte de caractéristiques classée comme plus significative est rendu plus important pour déterminer la classe d'attributs du premier attribut qu'un score de confiance de classe d'attributs indiqué par une proposition d'objet ayant un chevauchement d'objets plus petit avec la proposition principale d'objet et associé à une couche de carte de caractéristiques classée comme moins significative.

4. Procédé selon l'une quelconque des revendications 1 à 3, lesdites itérations n'étant effectuées que sur des membres du premier ensemble indiquant un score de confiance de classe d'attributs le plus élevé pour la classe d'attributs particulière.

5. Procédé selon l'une quelconque des revendications précédentes, le score global de classe d'attributs pour chaque classe d'attributs particulière étant en outre défini comme inversement proportionnel à un nombre des membres du premier ensemble sur lesquels sont effectuées les itérations.

6. Procédé selon l'une quelconque des revendications précédentes, le score de classement global pour la couche de carte de caractéristiques associée au membre étant défini comme un rapport d'un score de classement pour la couche de carte de caractéristiques à une somme de tels scores de classement pour l'ensemble de la pluralité de couches de carte de caractéristiques.

7. Procédé selon l'une quelconque des revendications précédentes, dans lequel le classement de la pluralité de couches de carte de caractéristiques dépend du premier attribut.

8. Procédé selon l'une quelconque des revendications précédentes, comprenant en outre l'identification de la proposition principale d'objet et de l'autre ou des autres propositions d'objet à l'aide d'une opération de suppression non maximale, NMS.

9. Procédé selon l'une quelconque des revendications précédentes, l'entité ANN comprenant un réseau pyramidal de caractéristiques, FPN, (220) pour fournir la pluralité de couches de carte de caractéristiques.

10. Procédé selon l'une quelconque des revendications précédentes, l'entité ANN comprenant une pluralité de couches (210) de convolution pour fournir les différentes résolutions spatiales de l'image.

11. Dispositif (500) de classification d'attributs d'objets dans une image (100), le dispositif comprenant une circuiterie (510) de traitement configurée pour amener le dispositif à :

- obtenir, à partir d'une sortie d'une entité (200, 201) de réseau de neurones artificiels, ANN, entraînée à localiser et classifier des objets (110, 112) dans une image (100) à l'aide d'une pluralité de couches (216-j) de carte de caractéristiques associées à des résolutions spatiales différentes, d'une pluralité de propositions d'objets dans une même image, chaque proposition d'objet indiquant au moins i) un score de confiance de classe d'objets pour une même première classe d'objets, ii) un emplacement d'objet estimé dans l'image, et iii) un score de confiance de classe d'attributs pour chacune d'une ou plusieurs classes d'attributs différentes pour un même premier attribut, et chaque proposition d'objet étant associée à une des couches de carte de caractéristiques ;
- identifier, parmi la pluralité de propositions d'objet et sur la base de leurs scores indiqués respectifs de confiance de classe d'objets, un premier ensemble incluant une proposition principale (322) d'objet et une ou plusieurs autres propositions (321, 323-326) d'objet ;
- obtenir un classement, en termes de capacité à extraire des informations utiles pour la classification du premier attribut, des couches de carte de caractéristiques en allant d'une couche de carte de caractéristiques la moins significative à une couche de carte de caractéristiques la plus significative, et
- déterminer une classe d'attributs pour le premier attribut sur la base du ou des scores de confiance de classe d'attributs de tous les membres du premier ensemble, ce qui inclut la prise en compte du classement des couches de cartes de caractéristiques associées à l'autre ou aux autres propositions d'objet, ainsi que des chevauchements d'emplacements d'objets de la proposition principale d'objet avec l'autre ou les autres propositions d'objet, dans le cadre de ladite détermination,

la détermination de la classe d'attributs pour le premier attribut comprenant en outre :

- pour chaque classe d'attributs particulière parmi la ou les classes d'attributs :

* le fait d'itérer sur des membres du premier ensemble indiquant un score de confiance de classe d'attributs pour la classe d'attributs particulière ;

* pour chaque itération, la détermination d'un terme égal ou proportionnel à un produit d'une taille de chevauchement d'emplacement d'objet du membre du premier ensemble avec la proposition principale d'objet, un score de classement global pour la couche de carte de caractéristiques associée au membre, et le score de confiance de classe d'attributs pour la classe d'attributs particulière indiqué par le membre, et

* la détermination d'un score global de classe d'attributs pour la classe d'attributs particulière comme étant égal ou proportionnel à une somme des termes déterminés pendant les itérations ;

et

- la détermination de la classe d'attributs pour le premier attribut comme la classe d'attributs ayant le score global de classe d'attributs le plus élevé.

12. Dispositif selon la revendication 11, la circuiterie de traitement étant en outre configurée pour amener le dispositif à mettre en œuvre l'entité (200, 201) d'ANN.

13. Programme informatique (620) de classification d'attributs d'objets dans une image (100), le programme informatique étant configuré pour, lorsqu'il est exécuté par une circuiterie (510) de traitement d'un dispositif (500), amener le dispositif à :

- obtenir, à partir d'une sortie d'une entité (200, 201) de réseau de neurones artificiels, ANN, entraînée à localiser et classifier des objets dans une image (100) à l'aide d'une pluralité de couches (216-j) de carte de caractéristiques associées à des résolutions spatiales différentes, une pluralité de propositions d'objets dans une même image, chaque proposition d'objet indiquant au moins i) un score de confiance de classe d'objets pour une même première classe d'objets, ii) un emplacement d'objet estimé dans l'image, et iii) un score de confiance de classe d'attributs pour chacune d'une ou plusieurs classes d'attributs différentes pour un même premier attribut, et chaque proposition d'objet étant associée à une des couches de carte de caractéristiques ;

- identifier, parmi la pluralité de propositions d'objets et sur la base de leurs scores indiqués respectifs de confiance de classe d'objets, un premier ensemble incluant une proposition principale (322) d'objet et une ou plusieurs autres propositions (321, 323-326) d'objet ;

- obtenir un classement, en termes de capacité à extraire des informations utiles pour la classification du premier attribut, des couches de carte de caractéristiques en allant d'une couche de carte de caractéristiques la moins significative à une couche de carte de caractéristiques la plus significative, et

- déterminer une classe d'attributs pour le premier attribut sur la base du ou des scores de confiance de classe d'attributs de tous les membres du premier ensemble, ce qui inclut la prise en compte du classement des couches de cartes de caractéristiques associées à l'autre ou aux autres propositions d'objet, ainsi que des chevauchements d'emplacements d'objets de la proposition principale d'objet avec l'autre ou les autres propositions d'objet, dans le cadre de ladite détermination,

la détermination de la classe d'attributs pour le premier attribut comprenant en outre :

- pour chaque classe d'attributs particulière parmi la ou les classes d'attributs :

* le fait d'itérer sur des membres du premier ensemble indiquant un score de confiance de classe d'attributs pour la classe d'attributs particulière ;

* pour chaque itération, la détermination d'un terme égal ou proportionnel à un produit d'une taille de chevauchement d'emplacement d'objet du membre du premier ensemble avec la proposition principale d'objet, un score de classement global pour la couche de carte de caractéristiques associée au membre, et le score de confiance de classe d'attributs pour la classe d'attributs particulière indiqué par le membre, et

* la détermination d'un score global de classe d'attributs pour la classe d'attributs particulière comme étant égal ou proportionnel à une somme des termes déterminés pendant les itérations ;

et

- la détermination de la classe d'attributs pour le premier attribut comme la classe d'attributs ayant le score global de classe d'attributs le plus élevé.

14. Produit-programme informatique (610) comprenant un support (630) de stockage lisible par ordinateur stockant un programme informatique (620) selon la revendication 13.

**Fig. 1**

**Fig. 2A**

**Fig. 2B**

| # | Location | Layer | Object | Color attribute | ... |
|---|----------|-------|--------|-----------------|-----|
| 1 | · | 1 | {'car': 0.79, ...} | {'red':0.47, 'blue':0.95, ...} | ... |
| 2 | · | 2 | {'car': 0.88, ...} | {'red':0.85, 'blue':0.84, ...} | ... |
| 3 | · | 3 | {'car': 0.82, ...} | {'red':0.64, 'blue':0.97, ...} | ... |
| 4 | · | 2 | {'car': 0.77, ...} | {'red':0.98, 'blue':0.32, ...} | ... |
| 5 | · | 2 | {'car': 0.87, ...} | {'red':0.96, 'blue':0.71, ...} | ... |
| 6 | · | 3 | {'car': 0.85, ...} | {'red':0.92, 'blue':0.87, ...} | ... |
| ⋮ | ⋮ | ⋮ | ⋮ | ⋮ | ⋱ |

**Fig. 3A**

*Fig. 3B*

*Fig. 3C*

*Fig. 3D*

100

400

S410 — Obtain plurality of object proposals from multiple feature map layers

S420 — Identify set of main object proposal and one or more other object proposals in the plurality of object proposals

S430 — Rank feature map layers from least significant to most significant

S440 — Determine attribute class for a first attribute based on attribute class confidence scores of members of the set, including to take ranking of feature map layers as well as overlaps of object proposals into account

*Fig. 4*

500

510

512

514

516

520

## Fig. 5A

500

510a  510b  510c

510d  510e

## Fig. 5B

610

620

630

## Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017015390 A1

- US 11087130 B2, Dong Liu

**Non-patent literature cited in the description**

- **KAIMING HE et al.** *Deep Residual Learning for Image Recognition*, https://doi.org/10.48550/arXiv.1512.03385
- **JING XU et al.** *RegNet: Self-Regulated Network for Image Classification*, https://doi.org/10.48550/arXiv.2101.00590
- **TSUNG-YI LIN et al.** *Feature Pyramid Networks for Object Detection*, https://doi.org/10.48550/arXiv.1612.03144

- **MINGXING TAN et al.** *EfficientDet: Scalable and Efficient Object Detection*, https://doi.org/10.48550 / arXiv.1911.09 070
- **WEI LIU et al.** *SSD: Single Shot MultiBox Detector*, https://doi.org/10.48550/arXiv.1512.02325
- **TSUNG-YI LIN et al.** *Focal Loss for Dense Object Detection*, https://doi.org/10.48550/arXiv.1708.02002